# EUROPEAN PATENT APPLICATION

(11) **EP 1 426 888 A1**
(43) Date of publication of application: **09.06.2004**
(21) Application number: 02707183.6
(22) Date of filing: 27.03.2002
(51) Int. Cl.: G06F 17/60, H04L 9/32, G06F 12/14

(54) **IDENTIFICATION INFORMATION ISSUING SYSTEM**

(30) Priority: 20.08.2001 JP 2001249397; 19.11.2001 WO PCT/JP01/10083
(71) Applicant: Vesta Corporation, Musashino-shi, Tokyo 180-0004 (JP)
(72) Inventor: HONDA, Toshinobu, Shinjuku-ku, Tokyo 161-0033 (JP); UGAWA, Taro, Itabashi-ku, Tokyo 174-0063 (JP)
(74) Representative: Wilson Gunn M'Caw
(86) International application number: PCT/JP2002/002989
(87) International publication number: WO 2003/017157

(57) **Abstract**

When image data of a bar code displayed on a cellular phone and read by a vending machine or the like are sent to a server apparatus, the server apparatus converts the received bar cord to a numerical value in accordance with a predetermined method. The server apparatus divides the bar code value by a divisor A to obtain a remainder a, and divides the bar code value by a divisor B to obtain a remainder b. The least common multiple for the numeric value A and the numeric value B is greater than the difference between the maximum value and the minimum value that the bar code value assumes. The server apparatus refers pointers registered in a storage position corresponding to the remainder a in the first table (111) and pointers registered in a storage position corresponding to the remainder b in the second table (112). The server apparatus authenticates the user when the same user information in a user database (107) can be accessed from both the first table (111) and the second table (112).

## Description

### TECHNICAL FIELD

The present invention relates to technology for preventing a fraudulent act that could otherwise be carried out on the basis of fraudulently obtained identification information.

### BACKGROUND ART

Commodities available on the market include age-restricted commodities, such as liquors and cigarettes. Specifically, an age limit is imposed on those who can purchase age-restricted commodities. The ability to freely purchase such age-restricted commodities at any time from vending machines is convenient for purchasers, but may incur drinking or smoking by minors. In order to cope with the problem, studies have been conducted on systems for causing a vending machine to read private identification information from a purchaser's ID card and permitting the vending machine to sell a commodity only when the purchaser is of legal age.

Generally, tickets for concerts and sports events; particularly tickets for popular events, such as concerts of popular singers and World Cup Soccer, are difficult to obtain. A ticket generally bears identification information allocated by an issuer, in addition to, for example, the date and time of an event and a seat number. The identification information establishes the legitimacy of the ticket.

However, according to the above-mentioned methods, once identification information is issued and delivered to a user, management of the identification information is left in the hands of the user over a long period of time. Thus, the identification information is always in danger of being used for forgery.

Conventionally, various methods for preventing forgery have been practiced. For example, in the case of a printed medium, a watermark or hologram is attached thereto; and in the case of electronic data, an IC card is employed as a recording medium therefor. However, since management of identification information required for reception of service is left in the hands of a user over a long period of time, conventional forgery prevention techniques have failed to sufficiently alleviate the danger of the identification information being forged for use in a fraudulent act.

In order to receive service by use of such identification information, a user must usually undergo personal authentication by means of the identification information. Conventionally, in order to perform personal authentication, identification information items substantially identical with those issued to users must be stored in, for example, a server apparatus of a service provider (issuer) while being associated with personal information items of the users. However, when the server apparatus is hacked, the stored identification information items of the users may be stolen. In other words, even when a user fulfills his/her responsibility for management of his/her identification information, the identification information is in danger of being used for fraudulent purposes.

### DISCLOSURE OF THE INVENTION

An object of the present invention is to provide an identification information issue system or the like that, even when identification information managed by a user is forged, can prevent an attempt to commit fraudulent act on the basis of the forged identification information.

Another object of the present invention is to provide an identification information issue system or the like in which identification information issued to a user is not stolen from the issuer's side for fraudulent use.

To achieve the above objects, an identification information issue system according to a first aspect of the present invention is characterized by comprising a radio communication terminal and a server apparatus capable of communicating with the radio communication terminal via at least a radio communication line, wherein
the radio communication terminal comprises:
primary identification information retainment means for retaining primary identification information managed by a user of the radio communication terminal; and
secondary identification information retainment means for retaining secondary identification information that can be received from the server apparatus as a result of input of the primary identification to the server apparatus, the secondary identification information having no regularity in relation to the primary identification information; the server apparatus is connected to:
   a first input unit for inputting thereto the primary identification information retained in the primary identification information retainment means, and a second input unit for inputting thereto the secondary identification information retained in the secondary identification information retainment means; and comprises:
      address storage means for storing address information items concerning radio communication terminals of users who legitimately manage respective primary identification information items, in such a manner as to be associable with the corresponding primary identification information items;
      secondary identification information issue means for issuing secondary identification information having a predetermined expiration time attached thereto, in response to input of the primary identification information from the first input unit;
      user associating means for associating the secondary identification information issued by the secondary identification information issue means with the user who legitimately manages the primary identification information having served as a trigger for the issue;
      secondary identification information transmission means for transmitting the secondary identification information issued by the secondary identification information issue means, via the radio communication line in accordance with address information stored in the address storage means in such a manner as to be associable with the primary identification information having served as a trigger for the issue, to thereby cause the radio communication terminal of the user who legitimately manages the primary identification information having served as a trigger for the issue to retain the issued secondary identification information;
      association judgment means for judging whether or not the secondary identification information input from the second input unit is associated with the user in the user associating means;
      expiration judgment means for judging whether or not the validity of the secondary identification information input from the second input unit has expired; and
      process permission means for permitting execution of a predetermined process when the association judgment means judges that association with the user is established, and the expiration judgment means judges that the validity has not expired, wherein
the primary identification information input from the first input unit and the secondary identification information input from the second input unit are in a form which does not enable determination of whether or not the information items have been retained in the radio communication terminal of the user who legitimately manages the information items.

In the above-described identification information issue system, in order for the server apparatus to permit execution of a predetermined process, the secondary identification information must be input to the server apparatus from the second input unit. The secondary identification information is transmitted to the radio communication terminal from the server apparatus in response to input of the primary identification information to the server apparatus from the first input unit. Since the secondary identification information is transmitted in accordance with address information stored in association with the primary identification information, the radio communication terminal of a user who has input forged primary identification information does not receive the secondary identification information. In distinction to the primary identification information, the secondary identification information is issued as needed, and a predetermined expiration time is attached thereto. Forging the secondary identification information having no regularity in relation to the primary identification information before the expiration time is reached is almost impossible. Therefore, even when the primary identification information managed by the user is forged, illegitimate permission for a predetermined process on the basis of the forged primary identification information can be prevented.

To achieve the above objects, an identification information issue apparatus according to a second aspect of the present invention is characterized by:
being able to communicate with a radio communication terminal via at least a radio communication line, the radio communication terminal being able to retain primary identification information managed by a user and secondary identification information that can be received through input of the primary identification information and having no regularity in relation to the primary identification information;
being connected to a first input unit and a second input unit for inputting the primary identification information and the secondary identification information, respectively, retained in the radio communication terminal; and
comprising:
   address storage means for storing address information items concerning radio communication terminals of users who legitimately manage respective primary identification information items, in such a manner as to be associable with the corresponding primary identification information items;
   secondary identification information issue means for issuing secondary identification information having a predetermined expiration time attached thereto, in response to input of the primary identification information from the first input unit;
   user associating means for associating the secondary identification information issued by the secondary identification information issue means with the user who legitimately manages the primary identification information having served as a trigger for the issue;
   secondary identification information transmission means for transmitting the secondary identification information issued by the secondary identification information issue means, via the radio communication line in accordance with address information stored in the address storage means in such a manner as to be associable with the primary identification information having served as a trigger for the issue, to thereby cause the radio communication terminal of the user who legitimately manages the primary identification information having served as a trigger for the issue to retain the issued secondary identification information;
   association judgment means for judging whether or not the secondary identification information input from the second input unit is associated with the user in the user associating means;
   expiration judgment means for judging whether or not the validity of the secondary identification information input from the second input unit has expired; and
   process permission means for permitting execution of a predetermined process when the association judgment means judges that association with the user is established, and the expiration judgment means judges that the validity has not expired, wherein
the primary identification information input from the first input unit and the secondary identification information input from the second input unit are in a form which does not enable determination of whether or not the information items have been retained in the radio communication terminal of the user who legitimately manages the information items.

In order for the identification information issue apparatus according to the second aspect to permit execution of a predetermined process, the secondary identification information must be input to the apparatus from the second input unit. The secondary identification information is transmitted to the radio communication terminal from the apparatus in response to input of the primary identification information to the apparatus from the first input unit. Since the secondary identification information is transmitted in accordance with address information stored in association with the primary identification information, the radio communication terminal of a user who has input forged primary identification information does not receive the secondary identification information. In distinction to the primary identification information, the secondary identification information is issued as needed, and a predetermined expiration time is attached thereto. Forging the secondary identification information having no regularity in relation to the primary identification information before the expiration time is reached is almost impossible. Therefore, even when the primary identification information managed by .the user is forged, illegitimate permission for a predetermined process on the basis of the forged primary identification information can be prevented.

In the identification information issue apparatus according to the second aspect,
the user associating means can comprise a plurality of tables in which associating information for association with a user having corresponding identification information assigned thereto is registered in storage positions corresponding to the results of arithmetically operating a numeric value corresponding to the secondary identification information issued by the secondary identification information issue means by use of a plurality of different arithmetic expressions; and
the association judgment means can comprise means for judging whether or not, in relation to the secondary identification information input from the second input unit, associating information for the same user is commonly registered in all of the plurality of tables in the storage positions corresponding to the results of the arithmetic operations by the plurality of arithmetic expressions.

In this case,
the plurality of arithmetic expressions can be, for example, expressions for obtaining remainders by dividing a numeric value corresponding to the secondary identification information input from the second input unit by different divisors; and
the least common multiple for the different divisors can be conditioned to be greater than the difference between the maximum and minimum values that can be assumed by the numeric value corresponding to the secondary identification information.

The identification information issue apparatus according to the second aspect can further comprise:
elimination means for eliminating the secondary identification information issued by the secondary identification information issue means, upon completion of transmission by the secondary identification information transmission means.

In the case where the user associating means and the association judgment means are configured as described above, even when the issued secondary identification information is eliminated by the elimination means, the user and the secondary identification information input from the second input unit can be associated with each other. Since the issued secondary identification information is not left in the identification information issue apparatus, the secondary identification information assigned to the user is not stolen from the issuer's side. Therefore, so long as the user fulfills his/her responsibility for managing his/her secondary identification information, the secondary identification information is not fraudulently used.

The identification information issue apparatus according to the second aspect can further comprise:
watermark attachment means for embedding one of a plurality of predetermined electronic watermarks in the secondary identification information issued by the secondary identification information issue means;
watermark associating means for associating the secondary identification information issued by the secondary identification information issue means with an electronic watermark attached by the watermark attachment means;
watermark analysis means for analyzing an electronic watermark embedded in the secondary identification information input from the second input unit; and
watermark judgment means for judging whether or not the electronic watermark analyzed by the watermark analysis means is associated with the input secondary identification information by the watermark associating means;
and can be configured such that:
   the process permission means can permit execution of the predetermined process when the watermark judgment means judges that the electronic watermark is associated with the secondary identification information.

Analytically identifying an electronic watermark embedded in the secondary identification information is difficult, and thus forging the secondary identification information before the expiration time is reached is almost impossible.

The identification information issue apparatus according to the second aspect may further comprise:
attribute judgment means for judging whether or not the user who legitimately manages the primary identification information input from the first input unit has a predetermined attribute;
and can be configured such that:
   the apparatus is connected to a vending machine which vends a commodity permitted to sell only to a user having the predetermined attribute and which is connected to the second input unit; and
   the process permission means notifies the vending machine connected to the second input unit having input the secondary identification information that the vending machine is permitted to vend the commodity.

Even in the case of a vending machine that vends such commodities as liquors and cigarettes on a 24-hour basis, the vending machine does not vend a commodity unless a user attribute satisfies a certain requirement, thereby achieving an object of, for example, preventing juveniles from engaging in undesirable conduct.

The identification information issue apparatus according to the second aspect, when connected to vending machines, may further comprise:
secondary identification information encryption means for encrypting the secondary identification information issued by the secondary identification information issue means, by use of an encryption key corresponding to a decryption key unique to the vending machine connected to the first input unit having input the primary identification information, and causing the secondary identification information transmission means to transmit the encrypted secondary identification information; and
secondary identification information decryption means for decrypting the secondary identification information input from the second input unit by use of the decryption key unique to the vending machine connected to the second input unit.

In this case, a vending machine other than that connected to the first input unit having input the primary identification information does not vend a commodity even when the secondary identification information is input thereto from the second input unit. Even when the radio communication terminal receives the secondary identification information that has been issued as a result of another user's forgery of the primary identification information, the user of the radio communication terminal has no means for knowing to which vending machine the forged primary identification information has been input. Therefore, by use of the secondary identification information that the user has unintentionally received, the user cannot fraudulently purchase a commodity.

In the identification information issue apparatus according to the second aspect,
the radio communication terminal may comprise a display unit for displaying the primary identification information and the secondary identification information. In this case,
the first and second input units can be formed of a read unit for reading the primary identification information or the secondary identification information displayed on the display unit.

The identification information issue apparatus according to the second aspect can further comprise model information storage means for storing model information for each radio communication terminal, including at least information about the display unit in association with the primary identification information; and
the secondary identification information issue means can issue the secondary identification information in accordance with the model information that is stored in the model information storage means in association with the primary identification information having served as a trigger for the issue.

The radio communication terminal can be, for example, a cellular phone.

Through issue of the secondary identification information in accordance with the model information concerning the radio communication terminal, the radio communication terminal can display the secondary identification information while making optimum use of its display unit. This configuration is particularly effective in the case where a user frequently changes models of the radio communication terminal, as in the case of cellular phones.

To achieve the above objects, an identification information issue apparatus according to a third aspect of the present invention is characterized by:
being able to communicate with a radio communication terminal via at least a radio communication line, the radio communication terminal being able to retain primary identification information managed by a user and secondary identification information to be issued in response to input of the primary identification information; and
comprising a memory for storing data including a program, a processor for executing the program stored in the memory, and a communication unit for transmitting information to and receiving information from the radio communication terminal under the control of the processor, and being connected to a first input unit and a second input unit for inputting the primary identification information and the secondary identification information, respectively, retained in the radio communication terminal, wherein
   the memory comprises:
   address storage means for storing address information items concerning radio communication terminals of users who legitimately manage respective primary identification information items, in such a manner as to be associable with the corresponding primary identification information items; and
   user associating means for associating the secondary identification information issued by the secondary identification information issue means with the user who legitimately manages the primary identification information having served as a trigger for the issue;
   the program includes:
   a first process for issuing, in response to input of the primary identification information from the first input unit, the secondary identification information having no regularity in relation to the input primary identification information and having a predetermined expiration time attached thereto;
   a second process for transmitting the secondary identification information issued by the first process, via the radio communication line in accordance with address information stored in the address storage means in such a manner as to be associable with the primary identification information having served as a trigger for the issue, to thereby cause the radio communication terminal of the user who legitimately manages the primary identification information having served as a trigger for the issue to retain the issued secondary identification information;
   a third process for judging whether or not the secondary identification information input from the second input unit is associated with the user in the user associating means;
   a fourth process for judging whether or not the validity of the secondary identification information input from the second input unit has expired; and
   a fifth process for permitting execution of a predetermined process when the third process judges that association with the user is established, and the fourth process judges that the validity has not expired, wherein
the primary identification information input from the first input unit and the secondary identification information input from the second input unit are in a form which does not enable determination of whether or not the information items have been retained in the radio communication terminal of the user who legitimately manages the information items.

To achieve the above objects, an identification information issue method according to a fourth aspect of the present invention is characterized by:
inputting to a computer apparatus from a first input unit primary identification information retained in a radio communication terminal and managed by a user;
issuing from the computer apparatus, in response to input of the primary identification information, secondary identification information having no regularity in relation to the primary identification information and having a predetermined expiration time attached thereto;
associating the issued secondary identification information with the user who legitimately manages the primary identification information having served as a trigger for the issue;
transmitting the issued secondary identification information via the radio communication line in accordance with address information previously stored in the computer apparatus in such a manner as to be associable with the primary identification information having served as a trigger for the issue, to thereby cause the radio communication terminal of the user who legitimately manages the primary identification information having served as a trigger for the issue to retain the issued secondary identification information;
inputting the secondary identification information received and retained by the radio communication terminal to the computer apparatus from a second input unit; and
permitting, by the computer apparatus, execution of a predetermined process when the input secondary identification information is associated with the user in the computer apparatus, and the validity of the input secondary identification information has not expired, wherein
the primary identification information input from the first input unit and the secondary identification information input from the second input unit are in a form which does not enable determination of whether or not the information items have been retained in the radio communication terminal of the user who legitimately manages the information items.

To achieve the above objects, an identification information issue apparatus according to a fifth aspect of the present invention is characterized by comprising:
identification information issue means for issuing identification information to be assigned to a user;
arithmetic operation means for arithmetically operating a numeric value corresponding to the identification information issued by the identification information issue means by use of a plurality of different arithmetic expressions to thereby obtain the respective arithmetic operation results;
a plurality of tables provided to correspond to the plurality of arithmetic expressions and adapted to store associating information for association with a user having corresponding identification information assigned thereto, in storage positions corresponding to the results of arithmetic operations;
registration judgment means for judging whether or not associating information for the same user is commonly registered in all of the plurality of tables in the storage positions corresponding to the arithmetic operation results obtained by the arithmetic operation means;
redo means for causing the identification information issue means to redo issue of identification information when the registration judgment means has judged that associating information for the same user is commonly registered;
associating means for registering associating information for association with a user to whom identification information is to be assigned, in the storage positions of the tables corresponding to the arithmetic operation results obtained by the arithmetic operation means when the registration judgment means has judged that associating information for the same user is not commonly registered; and
identification information output means for outputting identification information in relation to which the associating means has registered associating information, to a user to whom the identification information is to be assigned, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

In this case,
the plurality of arithmetic expressions can be, for example, expressions for obtaining remainders by dividing a numeric value corresponding to the identification information issued by the identification information issue means by different divisors; and
the least common multiple for the different divisors can be conditioned to be greater than the difference between the maximum and minimum values that can be assumed by the numeric value corresponding to the identification information issuable by the identification information issue means.

Preferably, the divisors to be used respectively in the plurality of arithmetic expressions are prime to each other.

The identification information issue apparatus according to the fifth aspect can further comprise:
elimination means for eliminating the identification information issued by the identification information issue means, upon completion of output of the identification information to the user by the identification information output means.

In the identification information issue apparatus according to the fifth aspect, even after the issued identification information is eliminated by the elimination means, when the identification information assigned to the user is input, the input identification information and the user can be associated with each other. Since the issued identification information is not left in the identification information issue apparatus, the identification information assigned to the user is not stolen from the issuer's side. Therefore, so long as the user fulfills his/her responsibility for managing his/her identification information, the identification information is not fraudulently used.

The identification information issue apparatus according to the fifth aspect may comprise:
user registration means for registering therein a user to whom the identification information is to be assigned;
request reception means for receiving an identification issue request from a user registered in the user registration means; and
user authentication means for, while referencing the user registration means, authenticating the user who has made an issue request received by the request reception means. In this case,
the identification information issue means can issue the identification information when the user authentication means authenticates the user.

In the identification information issue apparatus according to the fifth aspect,
the identification information output means may comprise, for example, means for transmitting the identification information issued by the identification information issue means, to a radio communication unit owned by a user to whom the identification information is to be assigned.

The identification information issue apparatus according to the fifth aspect can further comprise:
watermark attachment means for embedding one of a plurality of predetermined electronic watermarks in the identification information issued by the identification information issue means; and
watermark associating means for associating the identification information issued by the identification information issue means with an electronic watermark attached by the watermark attachment means.

In this case, even when the identification information is forged, the forged identification information cannot be used unless an electronic watermark embedded in the identification information is analytically identified; therefore, a fraudulent act to be attempted by use of the forged identification information can be prevented.

To achieve the above objects, an identification information issue apparatus according to a sixth aspect of the present invention is characterized by comprising:
a memory for storing data including a program, a processor for executing the program stored in the memory, and an output unit for outputting identification information assigned to a user under the control of the processor, wherein
   the memory includes:
   a plurality of tables in which associating information for association with a user having corresponding identification information assigned thereto is registered in storage positions corresponding to the results of arithmetically operating a numeric value corresponding to the identification information assigned to the user by use of a plurality of different arithmetic expressions, the tables being provided to correspond to the arithmetic expressions;
   the program includes:
   a first process for issuing identification information to be assigned to the user;
   a second process for arithmetically operating a numeric value corresponding to the identification information issued by the first process by use of the plurality of different arithmetic expressions to thereby obtain the respective arithmetic operation results;
   a third process for judging whether or not associating information for the same user is commonly registered in all of the plurality of tables in the storage positions corresponding to the arithmetic operation results obtained by the second process;
   a fourth process for redoing issue of identification information by the first process when the third process has judged that associating information for the same user is commonly registered;
   a fifth process for registering associating information for association with a user to whom identification information is to be assigned, in the storage positions of the tables corresponding to the arithmetic operation results obtained by the second process when the third process has judged that associating information for the same user is not commonly registered; and
   a sixth process for outputting from the output unit identification information in relation to which registration of associating information has been performed by the fifth process, to a user to whom the identification information is to be assigned, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

To achieve the above objects, an identification information issue method according to a seventh aspect of the present invention is characterized by:
issuing identification information to be assigned to the user;
arithmetically operating a numeric value corresponding to the issued identification information by use of a plurality of different arithmetic expressions to thereby obtain the respective arithmetic operation results;
judging whether or not associating information for a user having previously issued identification information is commonly registered in all of the tables corresponding to the arithmetic expressions in the storage positions corresponding to the obtained arithmetic operation results;
redoing the issue of identification information when associating information for the user having previously issued identification information is commonly registered in all of the tables;
registering associating information for the user to whom the identification information is issued, in the storage positions of the tables corresponding to the obtained arithmetic operation results when associating information for the user having previously issued identification information is not commonly registered in all of the tables; and
outputting, to the user, identification information in relation to which user associating information has been registered in the tables, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

To achieve the above objects, an authentication apparatus according to an eighth aspect of the present invention is characterized by comprising:
a plurality of tables in which associating information for association with a user having corresponding identification information assigned thereto is registered in storage positions corresponding to the results of arithmetically operating a numeric value corresponding to the identification information assigned to the user by use of a plurality of different arithmetic expressions, the tables being provided to correspond to the arithmetic expressions;
registration judgment means for judging whether or not associating information for the same user is commonly registered in all of the plurality of tables in the storage positions corresponding to the results of arithmetically operating a numeric value corresponding to identification information input by a certain user having the identification information assigned thereto, by use of the plurality of arithmetic expressions; and
user authentication means for authenticating the user when the registration judgment means judges that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

In this case,
the plurality of arithmetic expressions can be, for example, expressions for obtaining remainders by dividing a numeric value corresponding to the identification information input by the user by different divisors; and
the least common multiple for the different divisors can be conditioned to be greater than the difference between the maximum and minimum values that can be assumed by the numeric value corresponding to the identification information assignable to the user.

Preferably, the divisors to be used respectively in the plurality of arithmetic expressions are prime to each other.

In the authentication apparatus according to the eighth aspect,
the identification information assigned to the user can be eliminated upon completion of output to the user.

In the authentication apparatus according to the eighth aspect, even when the issued identification information is eliminated, the identification information input by the user and the user corresponding to the identification information can be associated with each other. Since the identification information issued to the user is not left, the identification information assigned to the user is not stolen from the issuer's side. Therefore, so long as the user fulfills his/her responsibility for managing his/her identification information, the identification information is not fraudulently used.

To achieve the above objects, an authentication apparatus according to a ninth aspect of the present invention is characterized by comprising:
a memory for storing data including a program, a processor for executing the program stored in the memory, and an input unit for inputting identification information assigned to a user under the control of the processor, wherein
   the memory includes:
   a plurality of tables in which associating information for association with a user having corresponding identification information assigned thereto is registered in storage positions corresponding to the results of arithmetically operating a numeric value corresponding to the identification information assigned to the user by use of a plurality of different arithmetic expressions, the tables being provided to correspond to the arithmetic expressions;
   the program includes:
   a first process for judging whether or not associating information for the same user is commonly registered in all of the plurality of tables in the storage positions corresponding to the results of arithmetically operating a numeric value corresponding to identification information input from the first input unit by use of the plurality of arithmetic expressions; and
   a second process for authenticating the user when the first process judges that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

To achieve the above objects, an authentication method according to a tenth aspect of the present invention is characterized by:
causing a user to input identification information assigned to the user;
arithmetically operating a numeric value corresponding to the input identification information by use of a plurality of different arithmetic expressions to thereby obtain the respective arithmetic operation results;
judging whether or not associating information for the same user is commonly registered in all of the tables corresponding to the arithmetic expressions in storage positions corresponding to the obtained arithmetic operation results; and
authenticating the user when judgment is made that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results; and
when the identification information is assigned to the user, associating information for the user is registered in the storage positions of the tables corresponding to the results of arithmetically operating a numeric value corresponding to the assigned identification information by use of the plurality of arithmetic expressions.

To achieve the above objects, a program according to an eleventh aspect of the present invention is characterized by:
being executed on a computer apparatus that can communicate with a radio communication terminal via at least a radio communication line, the radio communication terminal being able to retain primary identification information managed by a user and secondary identification information receivable through input of the primary identification information and having no regularity in relation to the primary identification information, and is connected to a first input unit and a second input unit for inputting the primary identification information and the secondary identification information, respectively, retained in the radio communication terminal; and
comprising:
   address storage means for storing address information items concerning radio communication terminals of users who legitimately manage respective primary identification information items, in such a manner as to be associable with the corresponding primary identification information items;
   secondary identification information issue means for issuing secondary identification information having a predetermined expiration time attached thereto, in response to input of the primary identification information from the first input unit;
   user associating means for associating the secondary identification information issued by the secondary identification information issue means with the user who legitimately manages the primary identification information having served as a trigger for the issue;
   secondary identification information transmission means for transmitting the secondary identification information issued by the secondary identification information issue means, via the radio communication line in accordance with address information stored in the address storage means in such a manner as to be associable with the primary identification information having served as a trigger for the issue, to thereby cause the radio communication terminal of the user who legitimately manages the primary identification information having served as a trigger for the issue to retain the issued secondary identification information;
   association judgment means for judging whether or not the secondary identification information input from the second input unit is associated with the user in the user associating means;
   expiration judgment means for judging whether or not the validity of the secondary identification information input from the second input unit has expired; and
   process permission means for permitting execution of a predetermined process when the association judgment means judges that association with the user is established, and the expiration judgment means judges that the validity has not expired, wherein
the primary identification information input from the first input unit and the secondary identification information input from the second input unit are in a form which does not enable determination of whether or not the information items have been retained in the radio communication terminal of the user who legitimately manages the information items.

To achieve the above objects, a program according to a twelfth aspect of the present invention is characterized by:
being executed on a computer apparatus; and
including:
   a step of issuing identification information to be assigned to a user;
   a step of arithmetically operating a numeric value corresponding to the issued identification information by use of a plurality of different arithmetic expressions to thereby obtain the respective arithmetic operation results;
   a step of judging whether or not associating information for a user having previously issued identification information is commonly registered in all of the tables corresponding to the arithmetic expressions in the storage positions corresponding to the obtained arithmetic operation results;
   a step of redoing the issue of identification information when associating information for a user having previously issued identification information is commonly registered in all of the tables;
   a step of registering associating information for the user to whom the identification information is issued, in the storage positions of the tables corresponding to the obtained arithmetic operation results when associating information for a user having previously issued identification information is not commonly registered in all of the tables; and
   a step of outputting, to the user, identification information in relation to which user associating information has been registered in the tables, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

To achieve the above object, a program according to a thirteenth aspect of the present invention is characterized by:
being executed on a computer apparatus; and
including:
   a step of judging whether or not associating information for the same user is commonly registered in all of tables corresponding to the arithmetic expressions in storage positions corresponding to the results of arithmetically operating a numeric value corresponding to identification information input by the user by use of the plurality of arithmetic expressions; and
   a step of authenticating the user when judgment is made that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results; and
   when the identification information is assigned to the user, associating information for the user is registered in the storage positions of the tables corresponding to the results of arithmetically operating a numeric value corresponding to the assigned identification information by use of the plurality of arithmetic expressions.

The programs according to the eleventh to thirteenth aspects are provided, for example, as follows: the programs are distributed while being stored on a recording medium, such as CD-ROM or DVD-ROM, from which a computer can read the programs, or are formed into signals and downloaded from a server system to a client system while being superposed on carriers.

### BRIEF DESCRIPTION OF THE DRAWINGS

FIG. 1 is a block diagram showing the configuration of a vending machine system to which a first embodiment of the present invention is applied;
FIG. 2 is a block diagram showing the configuration of the server apparatus of FIG. 1;
FIG. 3A is a view showing an example of a primary bar code, and FIG. 3B is a view showing an example of a secondary bar code;
FIG. 4 is a view showing the configuration of the primary bar code database of FIG. 2;
FIG. 5 is a view showing the configuration of the secondary bar code database of FIG. 2;
FIG. 6 is a block diagram showing the configuration of the vending machine of FIG. 1;
FIG. 7 is a block diagram showing the configuration of the cellular phone of FIG. 1;
FIGS. 8A and 8B are flowcharts showing a process for purchasing a commodity in the vending machine system of FIG. 1;
FIG. 9 is a flowchart showing the secondary bar code issue process of FIG. 8;
FIG. 10 is a block diagram showing the configuration of a server apparatus used in a second embodiment of the present invention;
FIG. 11 is a view explaining user authentication in the second embodiment of the present invention;
FIG. 12 is a view showing the configuration of the user database of FIG. 10;
FIG. 13 is a flowchart showing a user registration process (primary bar code issue process) in the second embodiment of the present invention;
FIG. 14 is a flowchart showing a secondary bar code issue process in the second embodiment of the present invention;
FIG. 15 is a flowchart showing a user authentication process in the second embodiment of the present invention;
FIG. 16 is a view showing a modification of the second embodiment;
FIG. 17A is a view explaining a bar code to which an electronic watermark according to a modified embodiment is applied;
FIG. 17B is a view showing a watermark pattern database which a server apparatus has in the case of FIG. 17A;
FIGS. 18A and 18B are flowcharts showing processes which the server apparatus executes in the case of FIG. 17A;
FIG. 19 is a view showing a model database which a server apparatus has in a modified embodiment;
FIG. 20A is a view schematically showing a method for providing a program to be executed on a server apparatus; and
FIG. 20B is a view schematically showing a method for providing a program to be executed on a server apparatus.

### BEST MODE FOR CARRYING OUT THE INVENTION

Embodiments of the present invention will next be described with reference to the accompanying drawings.

### First Embodiment:

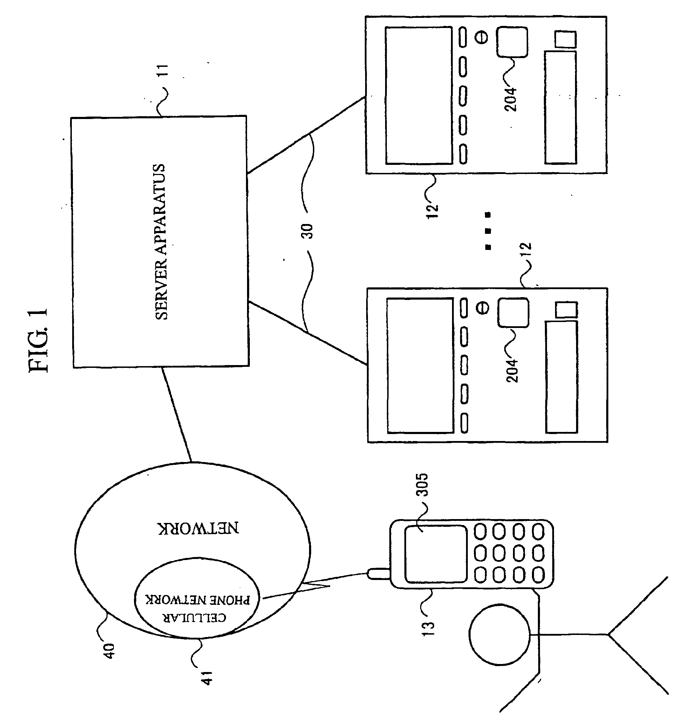

FIG. 1 is a block diagram showing the configuration of a vending machine system to which the present embodiment is applied. As shown in FIG. 1, the vending machine system includes a server apparatus 11; vending machines 12 each having a bar code reader 204; and a cellular phone 13 having a display unit 305. The server apparatus 11 and the vending machines 12 are connected via corresponding leased lines 30. The server apparatus 11 and the cellular phone 13 are connected via a network 40 that includes at least a cellular phone network 41.

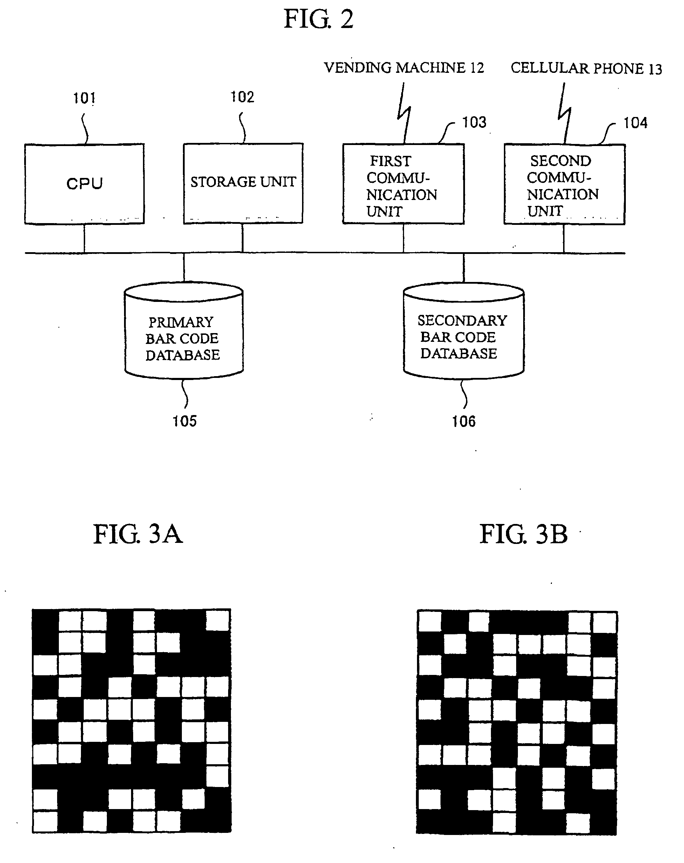

FIG. 2 is a block diagram showing the configuration of the server apparatus 11. As shown in FIG. 2, the server apparatus 11 includes a CPU (Central Processing Unit) 101; a storage unit 102; a first communication unit 103; and a second communication unit 104. The server apparatus 11 further includes a primary bar code database 105 and a secondary bar code database 106. In actuality, the primary bar code database 105 and the secondary bar code database 106 are incorporated in the storage unit 102.

By executing programs stored in the storage unit 102, the CPU 101 performs processes, such as issue of a secondary bar code that is triggered by reception of a primary bar code from the vending machine 12, and permission notification for selling a commodity. The storage unit 102 includes a main storage unit and an auxiliary storage unit; stores processing programs to be executed by the CPU 101; and is used as a data storage area. The first communication unit 103 transmits information to and receives information from the vending machine 12 via the leased line 30. The second communication unit 104 transmits information to and receives information from the cellular phone 13 via the network 40.

As shown in FIGS. 3A and 3B, each of a primary bar code and a secondary bar code assumes the form of a two-tone, two-dimensional matrix pattern. The primary bar code shown in FIG. 3A assumes a unique pattern that is predetermined for each cellular phone 13. The secondary bar code shown in FIG. 3B is issued by the server apparatus 11 so as to enable purchase of a commodity from the vending machine 12 when the vending machine 13 is caused to read the primary bar code. The secondary bar code is issued at random and assumes a pattern that has no regularity in relation to that of the primary bar code. The secondary bar code to be received by the cellular phone 13 is encrypted by means of an encryption key unique to the vending machine 12 that has read the primary bar code.

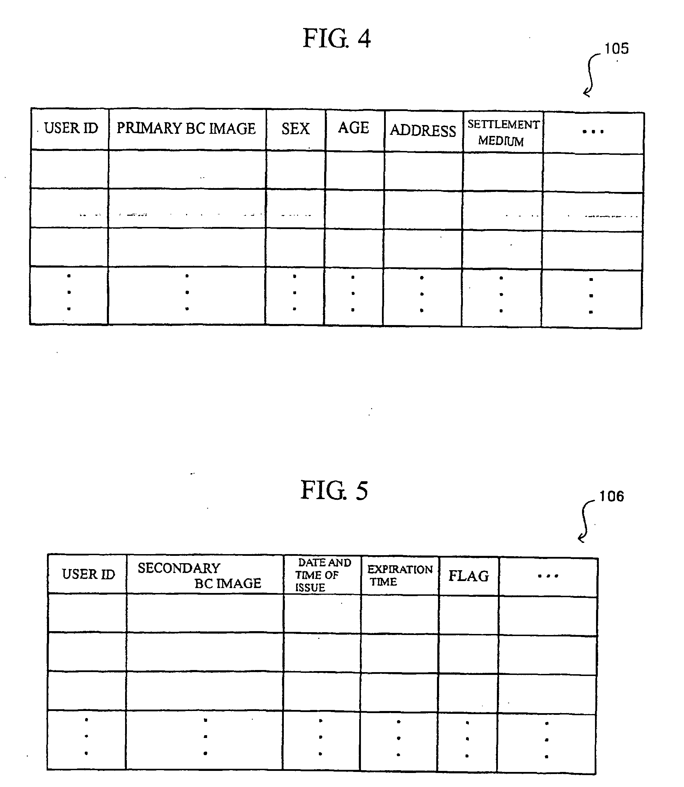

The primary bar code database 105 contains primary bar codes unique to individual users (managers of the cellular phones 13) and information regarding attributes of the users. As shown in FIG. 4, each record of the primary bar code database 105 includes a user ID, primary bar code image data, user-attribute information (sex and age), user address, and information regarding the user's settlement medium.

The user ID is intended to identify the user of the cellular phone 13. The primary bar code image data are data of an image having a pattern shown in FIG. 3A. The user-attribute information is used to judge whether or not the user can purchase commodities that the vending machine 12 vends. The address is of the cellular phone 13 to which the secondary bar code corresponding to the primary bar code is to be transmitted. When the secondary bar code can be transmitted to a target destination by use of a cellular phone number, the cellular phone number can be registered in place of the address. The settlement medium field contains, for example, a credit card number used to pay for a commodity purchased from the vending machine 12.

The secondary bar code database 106 contains secondary bar codes that are issued at random in accordance with input of corresponding primary bar codes. Each record of the secondary bar code database 106 is newly generated each time the primary bar code is input, and includes, as shown in FIG. 5, a user ID, secondary bar code image data, date and time of issue, expiration time, and a "used" flag.

The user ID is intended to identify the user of the cellular phone 13 and serves as a key for referencing the primary bar code database 105. The secondary bar code image data are data of an image having a pattern shown in FIG. 3B. The date and time of issue is when the secondary bar code has been issued. The expiration time is time after elapse of a predetermined time (e.g., 10 minutes) after issue of the secondary bar code and indicates a period of time when the user can purchase a commodity from the vending machine 12 by use of the issued secondary bar code. The "used" flag is set when a commodity is purchased from the vending machine 12 by use of the issued secondary bar code.

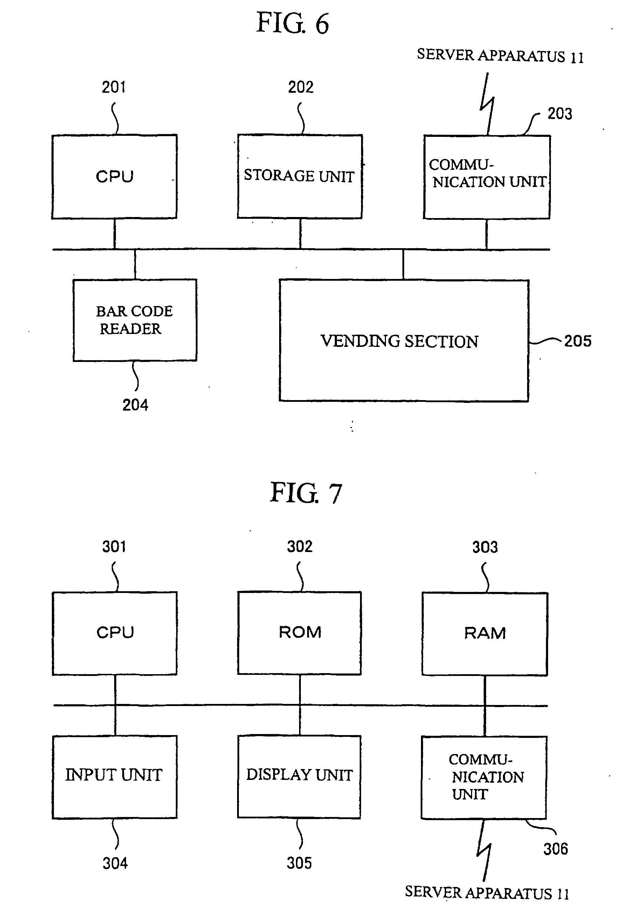

FIG. 6 is a block diagram showing the configuration of the vending machine 12. As shown in FIG. 6, the vending machine 12 includes, in addition to the bar code reader 204, a CPU 201, a storage unit 202, a communication unit 203, and a vending section 205. The CPU 201 and the storage unit 202 can also serve as a CPU and a storage unit for controlling the vending section 205.

By executing programs stored in the storage unit 202, the CPU 201 permits the vending section 205 to vend a commodity in accordance with a permission notification message (described later) that the server apparatus 11 transmits thereto in response to reception of the read primary and secondary bar codes. The storage unit 202 includes a main storage unit and an auxiliary storage unit; stores processing programs to be executed by the CPU 201; and is used as a data storage area. Data to be stored in the storage unit 202 include an encryption key and a decryption key (symmetric or asymmetric keys), which are uniquely allocated to each vending machine 12.

The communication unit 203 transmits information to and receives information from the server apparatus 11 via the leased line 30. The bar code reader 204 reads the primary bar code or the secondary bar code displayed on the display unit 305 of the cellular phone 13. The read primary or secondary bar code is transmitted from the communication unit 203 to the server apparatus 11 via the network 40 to thereby be input to the server apparatus 11. The bar code reader 204 is connected indirectly to the server apparatus 11. The vending section 205 basically has the same function as that of an ordinary vending machine, but may be adapted to vend those commodities, such as liquors and cigarettes, that can be vended to only those persons having certain predetermined attributes; i.e., the vending section 204 can vend a commodity only when a vending permission notification message is received from the server apparatus 11.

FIG. 7 is a block diagram showing the configuration of the cellular phone 13. As shown in FIG. 7, the cellular phone 13 includes, in addition to the display unit 305, a CPU 301, a ROM (Read Only Memory) 302, a RAM (Random Access Memory) 303, an input unit 304, and a communication unit 306. The cellular phone 13 further includes components required for performing communication; however, such components are not shown in FIG. 7, since they are not directly related to the present invention.

By executing programs stored in the ROM 302, the CPU 301 performs a process for managing the primary bar code and the secondary bar code. The CPU 301 causes the display unit 305 to display the primary bar code or the secondary bar code in accordance with an input from the input unit 304. The ROM 302 stores processing programs to be executed by the CPU 301 and stores primary bar code image data predetermined for each cellular phone 13. The RAM 30 is used as a data storage area. Data to be stored in the RAM 30 include secondary bar code image data (encrypted data).

The input unit 304 includes numeric keys "1" to "0," the "*" key, and the "#" key and is operated by a user for inputting a required instruction to the CPU 301. The display unit 305 includes a liquid crystal display and displays the image of the primary or secondary bar code in accordance with an input from the input unit 304. The communication unit 306 transmits information to and receives information from the server apparatus 11 via the network 40 including the cellular phone network 41.

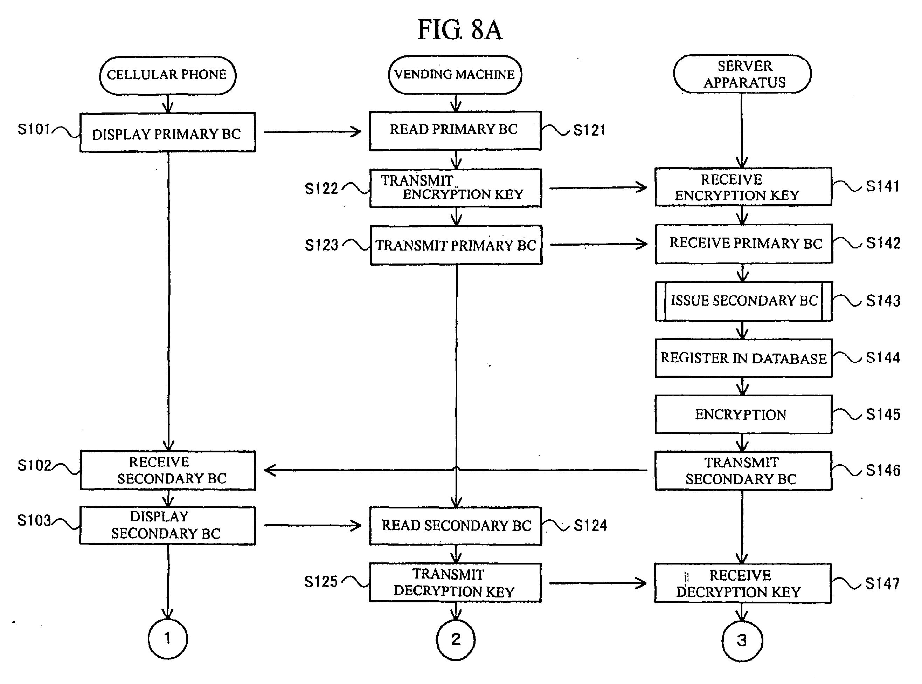

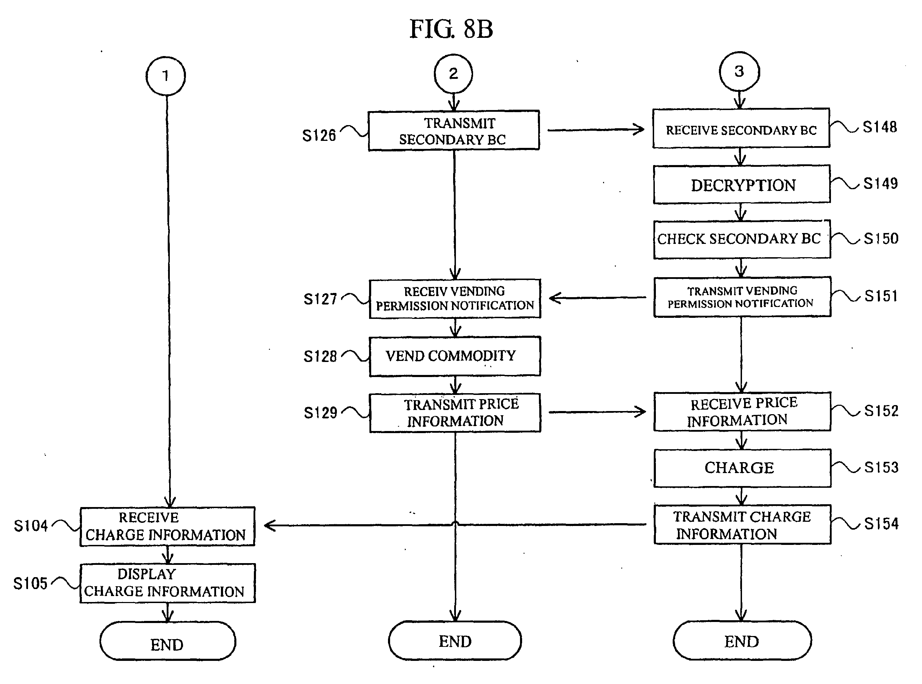

The operation of the vending machine system according to the present embodiment will next be described. FIGS. 8A and 8B are flowcharts showing a process for a user purchasing a commodity in the vending machine system according to the present embodiment.

When the user is to purchase a commodity from the vending machine 12, he/she operates the input unit 304 of the cellular phone 13 to cause the display unit 305 to display the primary bar code stored in the ROM 302 (step S101). When the user brings the primary bar code image displayed on the display unit 305 close to the bar code reader 204, the bar code reader 204 reads the primary bar code (step S121).

At this time, the vending machine 12 does not perform any process except reading of the primary bar code by means of the bar code reader 204. No information about the cellular phone 13 on which the primary bar code is displayed is input to the vending machine 12; thus, reading of the primary bar code by the bar code reader 204 does not give any information for judging whether or not the read primary bar code has been held in the cellular phone 13 of a legitimate user.

The CPU 201 of the vending machine 12 reads its unique encryption key stored in the storage unit 202 and causes the communication unit 203 to transmit the encryption key to the server apparatus 11 via the leased line 30 (step S122). The CPU 201 causes the communication unit 203 to transmit to the server apparatus 11 via the leased line 30 the primary bar code image data that the bar code reader 204 has read in step S121 (step S123).

The first communication unit 103 of the server apparatus 11 receives the encryption key that has been transmitted in step S122, and temporarily stores the encryption key in the storage unit 102 (step S141). Also, the first communication unit 103 receives the primary bar code image data that has been transmitted in step S122, and temporarily stores the image data in the storage unit 102 (step S142). At this time, information that the server apparatus 11 receives concerns only the primary bar code image data read by the bar code reader 204 and the unique encryption key of the vending machine 12. Therefore, the server apparatus 11 does not know whether or not the user attempting to purchase a commodity is a legitimate user.

The CPU 101 of the server apparatus 11 performs a secondary bar code issue process, which will be described in detail later, to thereby issue the secondary bar code (step S143). In some cases, as will be described later, in the secondary bar code issue process, the secondary bar code is not necessarily issued. However, the below description assumes that the secondary bar code is issued. When the secondary bar code is issued, the CPU 101 creates a new record in the secondary bar code database and registers, in the record, a user ID that is registered in the primary bar code database 105 in association with the received primary bar code image data, image data regarding the issued secondary bar code, current date and time, and expiration time after elapse of a predetermined time from the current date and time (step S144).

By use of,the encryption key that has been temporarily stored in the storage unit 102 in step S141, the CPU 101 encrypts image data regarding the issued secondary bar code (step S145). The CPU 101 causes the second communication unit 104 to transmit the encrypted secondary bar code image data to the address that is registered in the primary bar code database 105 in association with the received primary bar code image data; i.e., to the address of the user who legitimately manages the received primary bar code, via the network 40 including the cellular phone network 41 (step S146).

When the primary bar code is legitimate, the communication unit 306 of the cellular phone 13 that has displayed the primary bar code in step S101 receives the secondary bar code image data (encrypted data) that has been transmitted in step S146, and the received secondary bar code image data is temporarily stored in the RAM 303 (step S102). The user of the cellular phone 13 operates the input unit 304 of the cellular phone 13 so as to display the secondary bar code stored in the RAM 303 on the display unit 305 (step S103). When the user brings the secondary bar code image displayed on the display unit 305 close to the bar code reader 404 of the vending machine 12, the bar code reader 204 reads the encrypted secondary bar code (step S124).

The CPU 201 of the vending machine 12 reads the unique decryption key stored in the storage unit 202 and causes the communication unit 203 to transmit the decryption key to the server apparatus 11 via the leased line 30 (step S125). The CPU 201 causes the communication unit 203 to transmit to the server apparatus 11 via the leased line 30 the secondary bar code image data that the bar code reader 204 has read in the step S124 (step S126). The first communication unit 103 of the server apparatus 11 receives the decryption key that has been transmitted in step S125, and the received decryption key is temporarily stored in the storage unit 102 (step S147). Also, the first communication unit 103 receives the secondary bar code image data (encrypted data) that has been transmitted in step S126, and the received data is temporarily stored in the storage unit 102 (step S148).

By use of the decryption key that has been temporarily stored in the storage unit 102 in step S147, the CPU 101 decrypts the encrypted secondary bar code image data (step S149). The CPU 101 checks whether or not secondary bar code image data identical with the decrypted secondary bar code image data is registered in the secondary bar code database 106. When the secondary bar code is registered, the CPU 101 further references the secondary bar code database 106 and judges whether or not the validity of the secondary bar code has expired and whether or not the "used" flag is set (step S150).

In the case where the decrypted secondary bar code image data is registered; the validity of the secondary bar code has not expired; and the "used" flag is not set, the CPU 101 causes the first communication unit 103 to transmit a vending permission notification message, via the leased line 30, to the vending machine 12 that has transmitted the secondary bar code image data (step S151). Upon reception of the vending permission notification message, the communication unit 203 of the vending machine 12 transmits the message to the CPU 201 (step S127).

Upon reception of the vending permission message, the CPU 201 enables the vending section 205 to vend a commodity. The vending section 205 vends a commodity that the user has selected (step S128). The CPU 201 causes the communication unit 306 to transmit to the server apparatus 11 via the leased line 30 information about the price of the commodity that the vending section 205 has vended (step S129).

When the first communication unit 103 of the server apparatus 11 receives price information, the first communication unit 103 temporarily stores the information in the storage unit 102 (step S152). The CPU 101 reads information about settlement medium from the primary bar code database 105 while using, as a key, the user ID associated with the secondary bar code that the CPU 101 has checked in step S150, and by use of the settlement medium performs a charge process regarding the temporarily stored price (step S153).

Similarly, the CPU 101 reads a relevant address from the primary bar code database 105 and causes the second communication unit 104 to transmit information about completion of the charge process to the address via the network 40 including the cellular phone network 41 (step S154). When the communication unit 306 of the cellular phone 13 receives information about completion of the charge process (step S104), the CPU 301 causes the display unit 305 to display the information (step S105). A process required for the user to purchase a commodity from the vending machine 12 is thus completed.

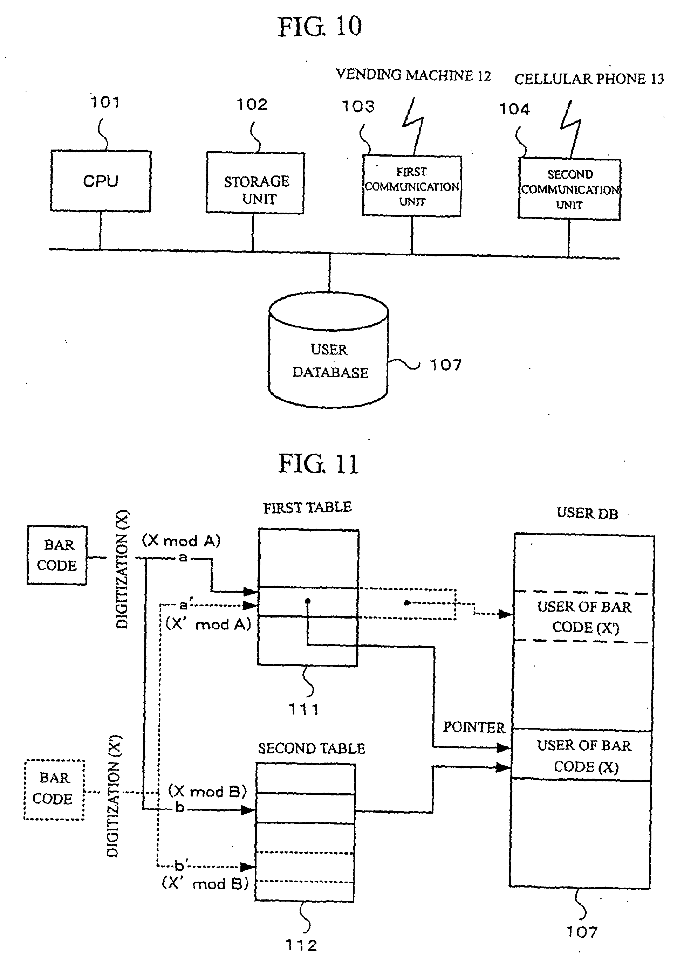

FIG. 10 is a flowchart showing in detail the secondary bar code issue process in step S143. The CPU 101 judges whether or not primary bar code image data identical with that received in step S142 is registered in the primary bar code database 105 (step S201). When the received primary bar code image data is not registered, the CPU 101 ends the processing of the flowchart without issuing a secondary bar code.

When the received primary bar code image data is registered, the CPU 101 judges whether or not the age of the user that is registered in the primary bar code database 105 in association with the primary bar code image data satisfies an age requirement for permitting the vending machine 12 to vend a commodity (step S202). When the age requirement is not satisfied, the CPU 101 ends the processing of the flowchart without issuing a secondary bar code.

When the age requirement is satisfied, the CPU 101 judges whether or not the sex of the user that is registered in the primary bar code database 105 in association with the primary bar code image data satisfies a sex requirement for permitting the vending machine 12 to vend a commodity (step S203). When the sex requirement is not satisfied, the CPU 101 ends the processing of the flowchart without issuing a secondary bar code.

When the sex requirement is satisfied, on the basis of information about settlement medium that is registered in the primary bar code database 105 in association with the primary bar code image data, the CPU 101 judges whether or not the user can be charged for a commodity that he/she is to purchase (step S204). When the user cannot be charged, the CPU 101 ends the processing of the flowchart without issuing a secondary bar code.

When the user can be charged, the CPU 101 generates a secondary bar code at random, irrespective of the primary bar code received in step S142. The CPU 101 judges whether or not the generated secondary bar code is already registered in the secondary bar code database 106 (step S206). When the secondary bar code is already registered, the CPU 101 returns to the process of step S205 and generates another secondary bar code. When the generated secondary bar code generated in step S205 is not registered, the CPU 101 issues the secondary bar code to the user and ends the processing of the flowchart.

When a secondary bar code is not issued in the secondary bar code issue process in step S143, the CPU 101 causes the first communication unit 103 or the second communication unit 104 to transmit to the vending machine 12 or the cellular phone 13, in place of a secondary bar code, a message stating that the secondary bar code cannot be issued. The user can recognize from output of the message that the secondary bar code cannot be issued.

In the case where the primary bar code image data received in step S142 is forgery, and a primary bar code identical with the forged primary bar code is registered in the primary bar code database 105, a secondary bar code is issued (on condition that other requirements such as age requirement are satisfied). However, since the issued secondary bar code is transmitted to a relevant address registered in the primary bar code database 105, even when a user who legitimately holds the primary bar code has not caused the bar code reader 204 to read the primary bar code, the user's cellular phone 13 receives the issued secondary bar code. The issued bar code is not transmitted to the cellular phone 13 of a user who holds the forged primary bar code.

In the case where, as a result of checking the secondary bar code database 106 in step S150, the CPU 101 has found that the secondary bar code is not registered or that, although the secondary bar code is registered, the validity of the secondary bar code has expired, or the "used" flag is set, the CPU 101 causes the first communication unit 103 or the second communication unit 104 to transmit to the vending machine 12 or the cellular phone 13 a nonpermission notification message in place of the vending permission notification message. The user can recognize from output of the message that he/she cannot purchase a commodity from the vending machine 12.

In the case where the bar code reader 204 of a vending machine 12 that differs from the vending machine 12 whose bar code reader 204 has read the primary bar code is caused to read the secondary bar code displayed on the display unit 305, a decryption key that the CPU 101 receives does not correspond to the encryption key that the CPU 101 has received; consequently, the CPU 101 fails to properly decrypt the received secondary bar code. Thus, as a result of checking the secondary bar code database 106 in step S150, the CPU 101 judges that the secondary bar code is not registered.

As described above, in the vending machine system according to the present embodiment, only a user who has received a secondary bar code from the server apparatus 11 by causing the bar code reader 204 to read a primary bar code can purchase a commodity from the vending machine 12. In issuing a secondary bar code, the CPU 101 of the server apparatus 11 references the primary bar code database 105 and checks whether or not the user has attributes that make him or her eligible for purchase of a commodity. When the user does not have attributes making him or her eligible for purchase of a commodity, he/she cannot obtain a secondary bar code. Thus, even when the vending machine 12 vends such commodities as liquors and cigarettes on a 24-hour basis, an undesirable problem, such as drinking or smoking by minors, does not arise, thereby preventing juveniles from engaging in undesirable conduct.

Since a user manages a primary bar code in the cellular phone 13 at all times, the primary bar code is susceptible to forgery. However, in order to purchase a commodity, the user must obtain a secondary bar code, which has no regularity in relation to the primary bar code. Since a secondary bar code to be issued is unknowable to the user, the secondary bar code is unlikely to be forged. Furthermore, expiration time is set for the validity of the secondary bar code. Thus, even when the secondary bar code is forged, the possibility that the validity has not expired and that the secondary bar code has not been used is near zero. Therefore, a commodity is not fraudulently purchased through forgery of even a secondary bar code.

Although a primary bar code is forged with relative ease, and in the case where the forged primary bar code is read by the bar code reader 204 of the vending machine 12, a secondary bar code issued in response to reading of the primary bar code is transmitted to a relevant address registered in the primary bar code database 105. The issued secondary bar code is not transmitted to the cellular phone 13 of a user who has forged the primary bar code. Therefore, even when a primary bar code is forged, a commodity is not fraudulently purchased.

The cellular phone 13 receives a secondary bar code that has been encrypted by use of an encryption key received from the vending machine 12. Only the vending machine 12 that has read the primary bar code has a decryption key for decrypting the encrypted secondary bar code. Even when another vending machine 12 reads the encrypted secondary bar code, the server apparatus 11 cannot decrypt the secondary bar code, since an appropriate decryption key is not available. Even when the cellular phone 13 receives a secondary bar code that has been issued as a result of another user's forgery of the primary bar code, the recipient user has no means for knowing which vending machine 12 has read the primary bar code that has served as a trigger for the issue of the secondary bar code. Therefore, by use of the secondary bar code that the user has unintentionally received, the user cannot fraudulently purchase a commodity.

The primary bar code database 105 contains information about users' settlement media, and the system charges a user, by means of his/her settlement medium, for the price of a commodity purchased from the vending machine 12. Therefore, if the user carries with him/her the cellular phone 13 that can display its primary bar code, he/she can purchase a commodity from the vending machine 12 at any time in a cashless manner.

### Second Embodiment:

In the above-described first embodiment, the primary bar codes and the secondary bar codes of users are stored in the primary bar code database 105 and the secondary bar code database 106, respectively, of the server apparatus 11 as images. In other words, the primary bar code and the secondary bar code of a user are managed not only in the cellular phone 13 of the user but also in the server apparatus 11. The present embodiment is a vending machine system capable of providing the same service as that provided by the first embodiment without managing the primary and secondary bar codes in the server apparatus 11.

FIG. 10 is a block diagram showing the configuration of the server apparatus 11 in the present embodiment. The server apparatus 11 in the present embodiment includes a user database 107 in place of the primary bar code database 105 and the secondary bar code database 106. The details of the user database 107 will be described later, but image data concerning primary and secondary bar codes is not stored anywhere in the server apparatus 11 including the user database 107. The server apparatus 11 can only judge whether bar code image data received from the vending machine 12 concerns the primary bar code or the secondary bar code, on the basis of patterns thereof.

In the present embodiment, since image data concerning primary and secondary bar codes is not stored in the server apparatus 11, user authentication is performed without involvement of collation of bar codes. FIG. 11 is a view explaining the user authentication method in the present embodiment. Since the user authentication method does not differ between a primary bar code and a secondary bar code, the description of FIG. 11 handles the primary bar code and the secondary bar code merely as a "bar code." A first table 111 and a second table 112 are stored in respectively predetermined areas of the storage unit 102.

Upon reception of bar code image data (represented by a solid line in FIG. 11) that has been read by the bar code reader 204 of the vending machine 12, the server apparatus 11 digitizes the data by a predetermined process. A different bar code pattern is digitized to a different value. A value X (hereinafter also called a "bar code value") obtained through digitization of a bar code is divided by a numeric value A to obtain a remainder a and by a numeric value B to obtain a remainder b. The numeric value A and the numeric value B are in such a relation that the least common multiple therefor is greater than the difference between the maximum value and the minimum value that a bar code value can assume. In the case where this relation is established, when dividing two different bar code values by the numeric value A yields the same remainder a, dividing the two bar code values by the numeric value B never yields the same remainder b. Preferably, the numeric value A and the numeric value B are prime to each other.

In a storage position corresponding to the remainder a in the first table 111, there is stored a pointer that points a position in the user database 107 where user information associated with the bar code is stored. In a storage position corresponding to the remainder b in the second table 112, there is stored a pointer that points a position in the user database 107 where user information associated with the bar code is stored. Since the bar code received from the vending machine 12 allows access to the same user from both of the first table 111 and the second table 112, the user is authenticated as an owner of the bar code.

In the storage position corresponding to the remainder a in the first table 111, there is also stored a pointer that points a position in the user database 107 where user information associated with another bar code (represented by a broken line in FIG. 11) is stored. However, user information associated with this another bar code cannot be accessed from the second table 112. When the server apparatus 11 receives image data concerning another bar code (represented by a broken line in FIG. 11), and a remainder a' after divining its bar code value X' by the numeric value A coincides with the remainder a, user information associated with the bar code represented by the solid line can be accessed from the first table 111. However, since a remainder b' after dividing the bar code value X' by the numeric value B never coincides with the remainder b, user information associated with the bar code represented by the solid line cannot be accessed from the second table 112. Therefore, a user irrelevant to a received bar code is never accidentally authenticated.

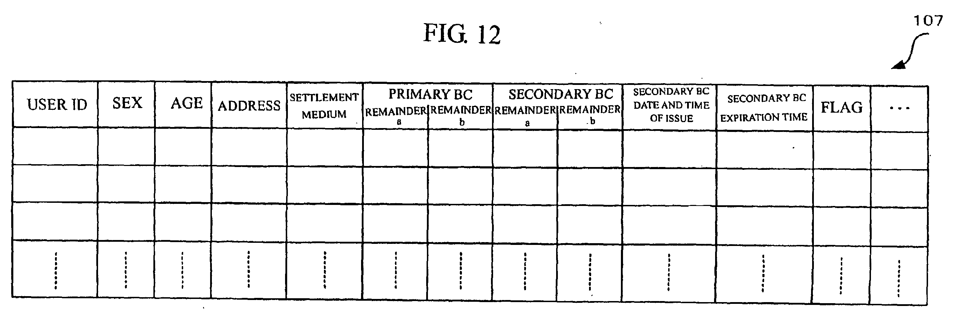

Next, the user database 107 will be described in detail. FIG. 12 is a view showing the configuration of the user database 107. Each record of the user database 107 is generated each time a user is registered, and includes, as shown in FIG. 12, a user ID, user-attribute information (sex and age), address, settlement medium, remainders a and b in relation to a bar code value of a primary bar code, remainders a and b associated with a bar code value of a secondary bar code, date and time of issue of a secondary bar code, expiration time of a secondary bar code, and a "used" flag in relation to a secondary bar code.

The remainders a and b in relation to bar code values of primary and secondary bar codes are remainders after dividing numeric values corresponding to the primary and secondary bar codes by the numeric values A and B, and are used to access the first table 111 from the user database 107. Other items are similar to those of the first embodiment. The remainders a and b in relation to a secondary bar code, the date and time of issue of a secondary bar code, the expiration time of a secondary bar code, and the "used" flag in relation to a secondary bar code are registered in the user database 107 only on a one-item-in-one-record basis. A secondary bar code can be issued again and again for a user; however, these items are updated every time a new secondary bar code is issued.

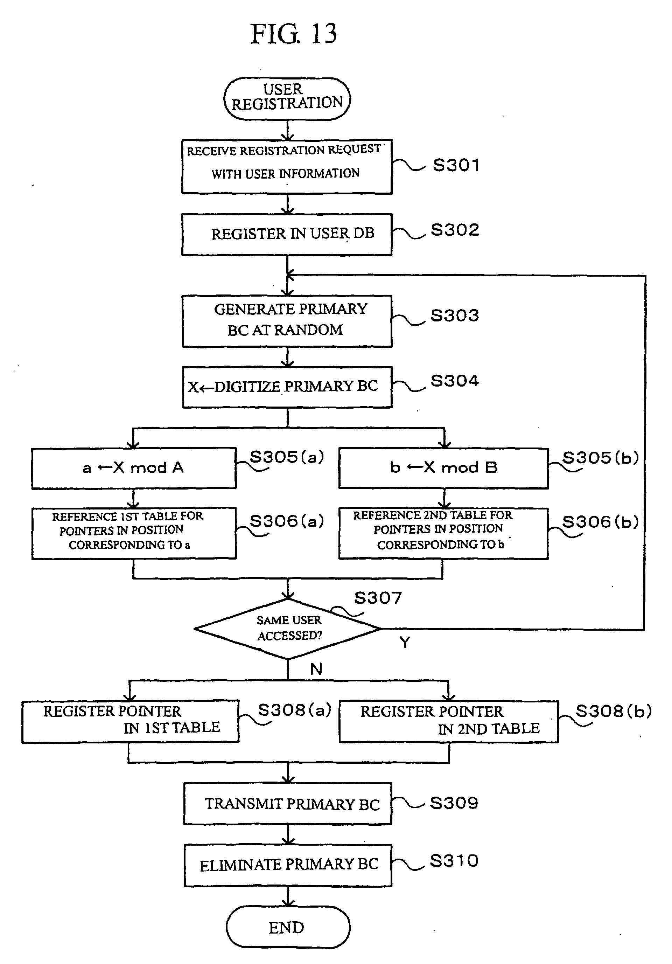

Processing in the vending machine system according to the present embodiment will next be described. A user who wants to purchase a commodity from the vending machine 12 by use of this system must undergo user registration and obtain a primary bar code in advance. FIG. 13 is a flowchart showing this user registration process.

The user, for example, downloads a registration form to the cellular phone 13 from the server apparatus 11; enters user information, such as age, sex, address, and settlement medium, to the registration form from the input unit 304; and transmits the registration form to the server apparatus 11 via the network 40. The second communication unit 104 of the server unit 11 receives the registration form containing the user information (step S301). The CPU 101 assigns a user ID to the user and registers the user information contained in the received registration form in the user database 107 (step S302).

The CPU 101 generates an image pattern of a primary bar code at random (step S303). The CPU 101 digitizes the generated primary bar code image pattern by a predetermined process and assigns a bar code value obtained through digitization to a variable X (step S304). No particular limitations are imposed on a method for digitizing an image pattern of a primary bar code so long as primary bar codes of the same pattern are digitized invariably into the same numeric value, whereas primary bar codes of different patterns are digitized invariably into different numeric values.

The CPU 101 divides the bar code value X by the numeric value A to obtain the remainder a (step S305(a)) and divides the bar code value X by the numeric value B to obtain the remainder b (step S305(b)). The least common multiple for the numeric value A and the numeric value B is greater than the difference between the maximum value and the minimum value that the bar code value X (including that corresponding to a secondary bar code, which will be described later) can assume. The CPU 101 fetches all pointers registered in a storage position corresponding to the remainder a in the first table 111 (step S306(a)) and fetches all pointers registered in a storage position corresponding to the remainder b in the second table 112 (step S306(b)).

The CPU 101 compares the pointers fetched from the first table 111 and the pointers fetched from the second table 112 to judge whether or not any pointer from the first table 111 and any pointer from the second table 112 indicate the same user information item among user information items registered in the user database 107 (step S307). When a certain pointer from the first table 111 and a certain pointer from the second table 112 indicate the same user information, the CPU 101 returns to the process of step S303 and redoes issue of a primary bar code.

When a pointer from the first table 111 and a pointer from the second table 112 that indicate the same user information item are not present, the CPU 101 registers a pointer that indicates user information concerning the user registered in the user database 107, in the first table 111 in a storage position corresponding to the remainder a, and updates a numeric value in the "primary bar code, remainder a" field of a record of the user in the user database 107 to the numeric value obtained in step S305(a) (step S308(a)). Also, the CPU 101 registers a pointer that indicates user information concerning the user registered in the user database 107, in the second table 111 in a storage position corresponding to the remainder b, and updates a numeric value in the "primary bar code, remainder b" field of a record of the user in the user database 107 to the numeric value obtained in step S305(b) (step S308(b)).

When, in steps S308(a) or 308(b), a pointer indicative of user information concerning another user is registered in the storage position in the user database 107, the pointer indicative of user information concerning the user in question is also registered in the same position by making use of, for example, a linked list.

Upon completion of registration of a pointer in the first and second tables 111 and 112, the CPU 101 transmits the primary bar code image pattern generated in step S303 to the cellular phone 13 from the second communication unit 104 in accordance with address contained in the user information (step S309). Upon completion of transmission of the primary bar code image pattern, the CPU 101 eliminates the primary bar code image pattern (step S310) and then ends the processing of the flowchart.

In the case where a user has lost the primary bar code issued to him/her, the CPU 101 receives a request to reissue a primary bar code from the cellular phone 13. In this case, a primary bar code is reissued in accordance with processing similar to that ranging from step S303 to step S310. However, processing described below is added to steps S308(a) and S308(b). The CPU 101 deletes the pointers that indicate user information concerning the user and have been registered in the first and second tables 111 and 112, in accordance with the remainders a and b in relation to a primary bar code contained in a record of the user in the user database 107, and then updates the numeric values contained in the "secondary bar code, remainder a" and "secondary bar code, remainder b" fields to the corresponding numeric values obtained in steps S305(a) and S305(b).

The user who, as described above, has undergone user registration and has received an issued primary bar code can purchase a commodity from the vending machine 12 as in the case of the first embodiment. In the present embodiment, an overall flow of purchase of a commodity is substantially similar to that in the case of the first embodiment. However, in the present embodiment, since image data concerning primary and secondary bar codes is not stored in the server apparatus 11, a procedure for issuing a secondary bar code differs from that of the first embodiment. A procedure for authenticating a user on the basis of primary bar code image data or secondary bar code image data that the server apparatus 11 receives from the vending machine 12 also differs from that of the first embodiment.

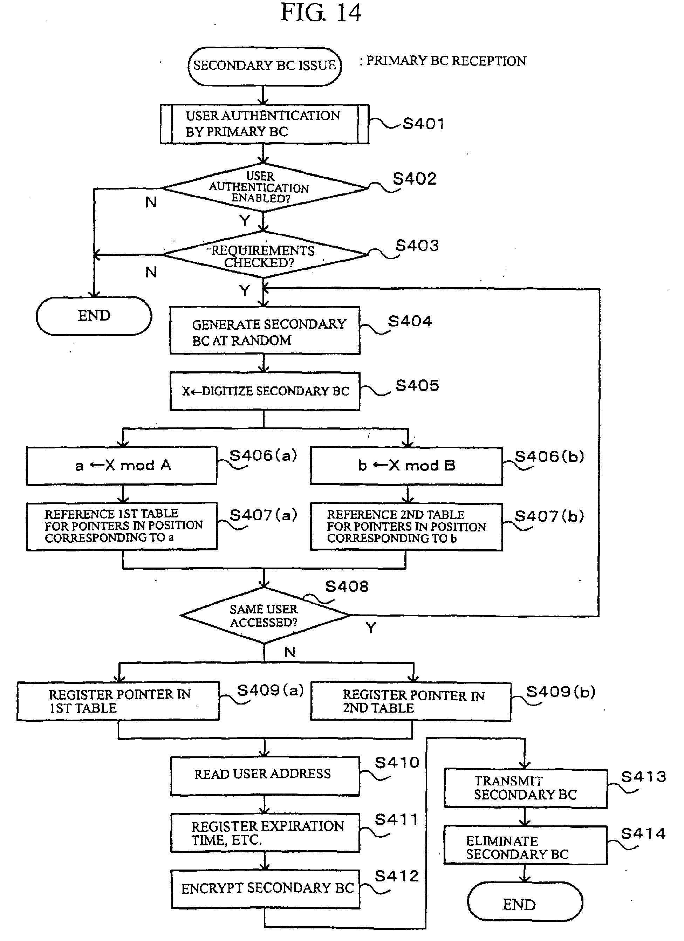

FIG. 14 is a flowchart showing a secondary bar code issue process that the CPU 101 of the server apparatus 11 in the present embodiment executes. The processing of this flowchart is executed in place of the processing ranging from steps S143 to S146.

Upon reception of primary bar code image data from the vending machine 12, the CPU 101 performs a user authentication process on the basis of the received primary bar code (step S401). The user authentication process will be described later. The CPU 101 judges whether or not the user has been authenticated in the user authentication process of step S401 (step S402). In the case where the user has not been not authenticated, the CPU 101 ends the processing of this flowchart without issuing a secondary bar code.

In the case where the user has been authenticated in the user authentication process of step S401, the CPU 101 references a record of the user database 107 associated with the authenticated user and judges whether or not the user satisfies relevant requirements (similar to the processing ranging from steps S202 to S204) (step S403). When the user fails to satisfy even any single requirement of them, the CPU 101 ends the processing of the flowchart without issuing a secondary bar code.

When the user satisfies all of the requirements, the CPU 101 generates a secondary bar code image pattern at random (step S404). The CPU 101 digitizes the generated secondary bar code image pattern by a predetermined process and assigns a bar code value obtained through digitization to a variable X (step S405). A process for digitizing the secondary bar code image pattern is similar to that of step S304.

The CPU 101 divides the bar code value X by the numeric value A to obtain the remainder a (step S406(a)) and divides the bar code value X by the numeric value B to obtain the remainder b (step S406(b)). The same values as those used in the flowchart of FIG. 13 are used for the numeric values A and B. The CPU 101 fetches all pointers registered in a storage position corresponding to the remainder a in the first table 111 (step S407(a)) and fetches all pointers registered in a storage position corresponding to the remainder b in the second table 112 (step S407(b)).

The CPU 101 compares the pointers fetched from the first table 111 and the pointers fetched from the second table 112 to judge whether or not any pointer from the first table 111 and any pointer from the second table 112 indicate the same user information item among user information items registered in the user database 107 (step S408). When a certain pointer from the first table 111 and a certain pointer from the second table 112 indicate the same user information item, the CPU 101 returns to the process of step S408 and redoes issue of a secondary bar code.

When a pointer from the first table 111 and a pointer from the second table 112 that indicate the same user information item are not present, the CPU 101 registers a pointer that indicates user information concerning the user registered in the user database 107, in the first table 111 in a storage position corresponding to the remainder a. The CPU 101 deletes the pointer that indicates user information concerning the user and has been registered in the first table 111, in accordance with the remainder a in relation to a secondary bar code contained in a record of the user in the user database 107, and then updates the numeric value contained in the "secondary bar code, remainder a" field to the numeric value obtained in step S406(a) (step S409(a)).

The CPU 101 registers a pointer that indicates user information concerning the user registered in the user database 107, in the second table 111 in a storage position corresponding to the remainder b. The CPU 101 deletes the pointer that indicates user information concerning the user and has been registered in the second table 112, in accordance with the remainder b in relation to a secondary bar code contained in a record of the user in the user database 107, and then updates the numeric value contained in the "secondary bar code, remainder b" field to the numeric value obtained in step S406(b) (step S409(b)).

When, in steps S409(a) or 409(b), a pointer indicative of user information concerning another user is registered in the storage position in the user database 107, the pointer indicative of user information concerning the user in question is also registered in the same position by making use of, for example, a linked list.

Upon completion of registration of relevant pointers in the first and second tables 111 and 112, the CPU 101 reads address contained in a record associated with user information that can be accessed from the two tables 111 and 112 (step S410). The CPU 101 reregisters, in the user information record, the date and time of issue (current date and time) of a secondary bar code and the expiration time of a secondary bar code after elapse of a predetermined period of time and resets the "used" flag in the record (step S411). By use of the encryption key received in step S141, the CPU 101 encrypts the secondary bar code image data generated in step S404 (step S412).

The CPU 101 transmits the secondary bar code image pattern encrypted in step S412 from the second communication unit 104 to the cellular phone 13 in accordance with the address that the CPU 101 has read in step S410 (step S413). Upon completion of transmitting the secondary bar code image pattern, the CPU 101 eliminates the secondary bar code image pattern (step S414) and then ends the processing of this flowchart.

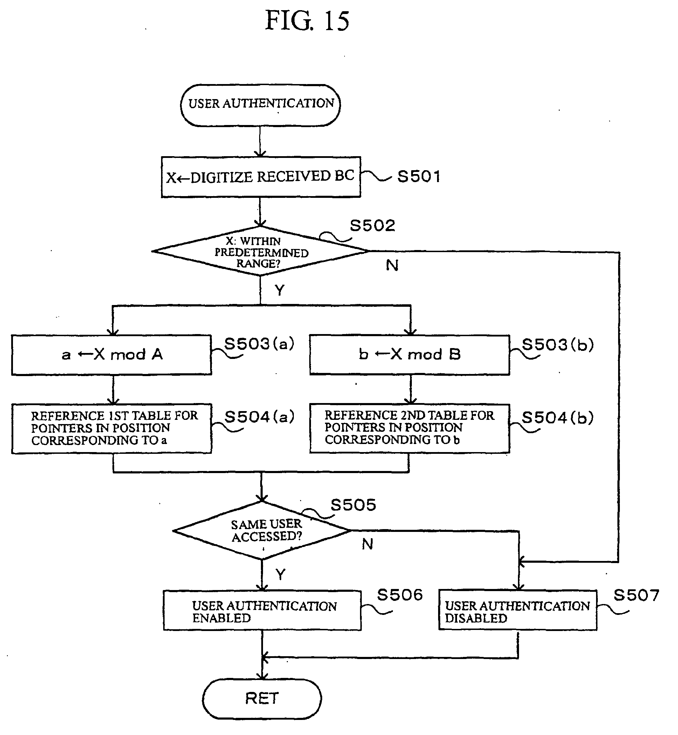

FIG. 15 is a flowchart showing a process for authenticating a user on the basis of primary bar code image data or secondary bar code image data that the server apparatus 11 has received from the vending machine 12. User authentication based on a primary bar code is executed in the above-described step S401. User authentication based on a secondary bar code is executed in the process of step S150, in place of checking whether or not a relevant secondary bar code is registered in the secondary bar code database 106. User authentication based on a primary bar code and user authentication based on a secondary bar code are of the same process and thus are both described with reference to this flowchart. The term "bar code" appearing in the description of FIG. 15 denotes a primary bar code or a secondary bar code.

The CPU 101 digitizes a bar code image pattern (a decrypted image pattern in the case of a secondary bar code) received from the vending machine 12 by a predetermined process and assigns a bar code value obtained through digitization to a variable X (step S501). A process for digitizing the bar code image pattern is similar to that of step S304. The CPU 101 judges whether or not the bar code value X obtained through digitization falls within the range of a primary bar code that can be generated in step S303 or within the range of a secondary bar code that can be generated in step S404 (step S502).

When the bar code value X falls within the range of a primary or secondary bar code that can be generated, the CPU 101 divides the bar code value X by the numeric value A to obtain the remainder a (step S503(a)) and divides the bar code value X by the numeric value B to obtain the remainder b (step S503(b)). The same values as those used in the flowchart of FIG. 13 are used for the numeric values A and B. The CPU 101 fetches all pointers registered in a storage position corresponding to the remainder a in the first table 111 (step S504(a)) and fetches all pointers registered in a storage position corresponding to the remainder b in the second table 112 (step S504(b)).

The CPU 101 compares the pointers fetched from the first table 111 and the pointers fetched from the second table 112 to judge whether or not any pointer from the first table 111 and any pointer from the second table 112 indicate the same user information item among user information items registered in the user database 107 (step S505). When a certain pointer from the first table 111 and a certain pointer from the second table 112 indicate the same user information item, the CPU 101 authenticates the user associated with the user information item that the pointers from both tables 111 and 112 indicate (step S506), and then ends the processing of this flowchart.

When, in step S502, the CPU 101 judges that the bar code value X falls outside the range of a primary or secondary bar code or when, in step S505, a pointer from the first table 111 and a pointer from the second table 112 that indicate the same user information item are not present, the CPU 101 disables user authentication (step S508) and then ends the processing of this flowchart.

When a user is authenticated in accordance with a secondary bar code image pattern, the CPU 101 checks, in step S150, user information concerning the authenticated user for expiration time and the status of the "used" flag. When relevant requirements are satisfied, the server apparatus 11 transmits a vending permission notification message to the vending machine 12.

As described above, in the vending machine system according to the present embodiment, when issuing a primary bar code or a secondary bar code, the server apparatus 11 registers a pointer indicative of a user associated with the bar code in the first and second tables 111 and 112 in storage positions corresponding to the remainders a and b obtained from arithmetic operation on a bar code value. Upon reception of a primary bar code image pattern or a secondary bar code image pattern from the vending machine 12, the server apparatus 11 references the first table 111 and the second table 112 in accordance with the remainders a and b obtained through digitization of the received image pattern, to thereby authenticate a user. Thus, without involvement of collation of bar codes, a primary or secondary bar code can be associated with a user at high speed by means of arithmetic operations and reference to stored data.

The numeric value A and the numeric value B, which serve as divisors for dividing a bar code value of a primary or secondary bar code, are in such a relation that the least common multiple therefor is greater than the difference between the maximum value and the minimum value that a bar code value can assume. In such division of different bar code values, the same remainder value never results in terms of both the remainders a and b; thus, user information concerning individual users registered in the user database 107 is never accessed from both of the first table 111 and the second table 112 on the basis of a bar code of an irrelevant user. Therefore, a user can be uniquely identified from a primary bar code or a secondary bar code.

Since a primary or secondary bar code can be associated with a user without involvement of collation of bar codes, upon completion of transmission of an issued primary or secondary bar code to the cellular phone 13, the server apparatus 11 eliminates the primary or secondary bar code. In other words, there is no need for the server apparatus 11 to store an issued primary or secondary bar code image pattern. Also, a primary bar code image pattern and a secondary bar code image pattern are not stored in other computer devices except the cellular phone 13.

As described above, the vending machine system according to the present embodiment does not need a database for storing primary and secondary bar code image patterns. Therefore, storage capacity of the server apparatus 11 can be reduced. Since the information quantity of an image pattern such as a bar code is relatively large as compared with the information quantity of character data, this feature is very effective in terms of reduction in required storage capacity.

A primary bar code image pattern and a secondary bar code image pattern are not stored in other than the cellular phone 13. Thus, for example, even when a hacker hacks the server apparatus 11, primary and secondary bar code image patterns assigned to individual users are never stolen. Therefore, high-level security can be attained for primary and secondary bar codes that are used as information for authentication. Also, a user can have the security of protection from a third-person's fraudulent obtainment of the user's primary and secondary bar codes so long as the user properly manages the primary and secondary bar codes.

### Modifications of the Embodiments

The present invention is not limited to the above-described embodiments, but may be modified or applied in various forms. Modifications of the above-described embodiments applicable to the present invention will next be described.

According to the above-described second embodiment, a bar code value obtained through digitizing a primary or secondary bar code by a predetermined process is divided by the numeric value A or B to thereby obtain the remainder a or b. By contrast, a value after subtracting the minimum value that a bar code value can assume, from a bar code value obtained through digitization or a value after subtracting a bar code value obtained through digitization from the maximum value that a bar code value can assume may be divided by the numeric value A or B. In this case, for a certain possible range of a bar code value, a dividend becomes considerably small, whereby a dividing process can be performed at high speed.

According to the above-described second embodiment, the server apparatus 11 receives a primary or secondary bar code image pattern from the vending machine 12. By contrast, the vending machine 12 may be configured in such a manner as to digitize a primary or secondary bar code image pattern that the bar code reader 204 has read and to transmit a thus-obtained bar code value to the server apparatus 11. Alternatively, the vending machine 12 may be configured in such a manner as to divide a bar code value by the numeric values A and B and to transmit thus-obtained remainders a and b to the server apparatus 11.

According to the above-described second embodiment, a pointer indicative of user information is registered in the first and second tables 111 and 112 in respective storage positions corresponding to the remainders a and b after dividing a numeric value corresponding to a primary or secondary bar code by the numeric values A and B. However, another information item (e.g., a user ID) capable of uniquely identifying user information may be registered in the first and second tables 111 and 112. In this case, user authentication can be performed by judging whether or not the same information item is registered in the first and second tables 111 and 112 in respective storage positions corresponding to the remainders a and b.

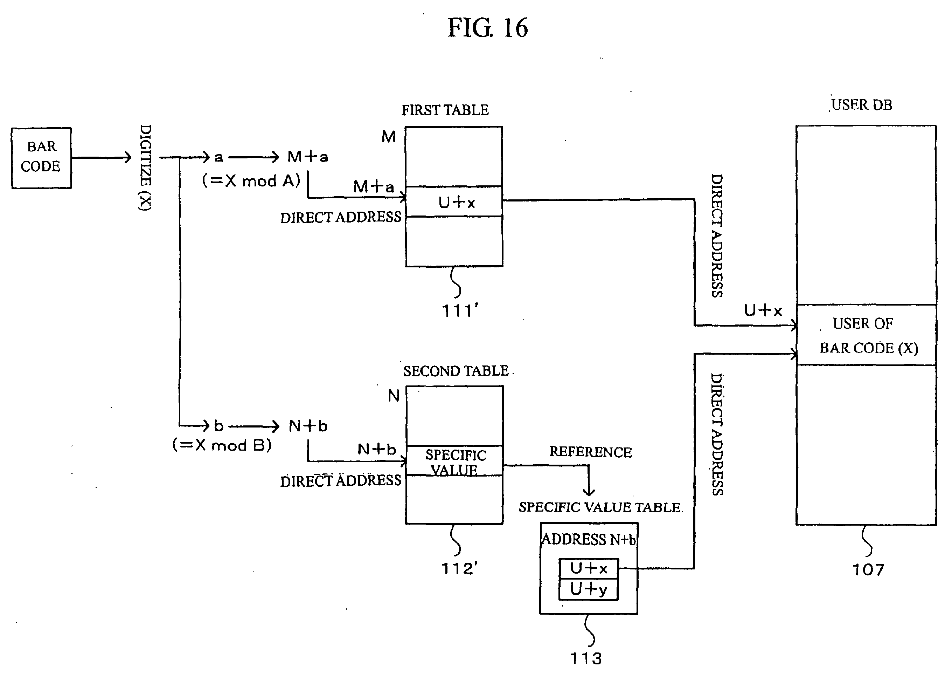

A direct addressing method may be applied so as to make higher-speed association between a primary or secondary bar code and a user. FIG. 16 is a view explaining this modified embodiment. In the description of FIG. 16, a primary bar code and a secondary bar code are called merely as a "bar code." A start address of the first table 111' is M, and a start address of the second table 112' is N. A start address of user information corresponding to a bar code is stored in individual words of the first and second tables 111' and 112'. In the case where a newly issued bar code causes collision in a certain word, a specific value is stored in the word, and a specific value table 113 corresponding to the word is separately provided.

The CPU 101 digitizes a bar code that the CPU 101 has generated at random, or a bar code that the CPU 101 has received from the vending machine 12, to obtain the bar code value X; divides the bar code value X by the numeric value A to obtain the remainder a; adds the start address M to the remainder a to obtain an address "M + a," which serves as a direct address; and references the first table 111' at the address. The CPU 101 divides the bar code value X by the numeric value B to obtain the remainder b; adds the start address N to the remainder b to obtain an address "N + b," which serves as a direct address; and references the second table 112' at the address. When a specific value is stored at the address M + a or the address N + b, the CPU 101 references the specific value table 113 provided in association with the specific value.

When a start address of the same user information item is stored at the addresses M + a and N + b (in some cases, in the specific value table 113 provided in association with these addresses), the relevant user is authenticated. User information can be fetched from the user database 107 by referencing the user database 107 at an address, which serves as a direct address, stored in the addresses M + a and N + b (in some cases, in the specific value table 113 provided in association with these addresses).

According to the above-described second embodiment, a pointer indicative of user information is registered in the first and second tables 111 and 112 in accordance with the remainders a and b after dividing a bar code value corresponding to a primary or secondary bar code by the numeric values A and B, respectively. However, the present invention can be embodied such that hash values are calculated by use of a plurality of hash functions, and a pointer indicative of user information is registered in storage positions corresponding to the hash values in a plurality of hash tables provided in association with the hash functions. Notably, calculation that is performed on two different bar codes by use of at least a single kind of hash function must yield different hash values.

According to the above-described first and second embodiments, a secondary bar code is issued in accordance with a primary bar code that is allocated to each user. By contrast, a bar code that is used in a manner similar to that of a secondary bar code being used in the embodiments may be issued and transmitted to a user in response to a request that the user makes in a way different from that of the embodiments (e.g., a bar code issue request that is made through notification of an originator number of the cellular phone 13).

According to the above-described first and second embodiments, records of the primary bar code database 105 or the user database 107 contain information concerning user attributes in association with primary bar code images. By contrast, a primary bar code itself may contain information concerning user attributes. Upon reception of the primary bar code from the vending machine 12, the CPU 101 of the server apparatus 11 judges whether or not the user attributes contained in the primary bar code satisfy requirements for permitting vending a commodity. When the user attributes satisfy the requirements for permitting vending a commodity, the CPU 101 of the server apparatus 11 issues a secondary bar code.

According to the first and second embodiments, the vending machine 12 has an encryption key and a decryption key for a secondary bar code and transmits the encryption key to the server apparatus 11 when a primary bar code is read, and the decryption key to the server apparatus 11 when a secondary bar code is read. However, the server apparatus 11 may be configured in such a manner as to include a database in which encryption keys and decryption keys are registered in association with the vending machines 12 and such that the server apparatus 11 reads an encryption key or a decryption key from the database in accordance with the vending machine 12 that has transmitted thereto a primary or secondary bar code, and encrypts or decrypts the secondary bar code by use of the read encryption or decryption key. Alternatively, the system may be configured such that encryption or decryption keys are registered in a database of the server apparatus 11, while encryption or decryption keys that are not registered are transmitted to the server apparatus 11 from the respective vending machines 12.

A management computer other than the server apparatus 11 and the vending machines 12 may be used to manage identification information concerning the vending machines 12, and encryption keys and decryption keys that are unique to the individual vending machines 12. For example, a management computer may be connected to a plurality of, not all of, the vending machines 12 used in the above-described system and adapted to transmit, to the server apparatus 11, identification information concerning the vending machines 12, and relevant encryption and decryption keys. The server apparatus 11 may transmit information to the vending machines 12 via the management computer. In this case, although the server apparatus 11 cannot identify individual vending machines 12, so long as the server apparatus 11 can identify the management computer, the server apparatus 11 can transmit, via the management computer, a vending permission notification message to the vending machine 12 whose bar code reader 204 has read a secondary bar code.

According to the above-described first and second embodiments, the server apparatus 11 and the vending machines 12 are connected together by use of the respective leased lines 30. The leased lines 30 may be radio lines. In place of leased lines, an extranet may be employed. The server apparatus 11 and the vending machines 12 may be connected together by dial-up through telephone lines.

According to the above-described first and second embodiments, expiration time for a secondary bar code is registered in the secondary bar code database or the user database 107 such that, when a predetermined time elapses after issue of the secondary bar code, the secondary bar code is invalidated, thereby preventing fraudulent use of a forged secondary bar code. However, antiforgery technology that is applicable to a secondary bar code in the present invention is not limited thereto.

A program written in the Java (trademark) language or the like may be embedded in a secondary bar code such that, when a predetermined time elapses after the cellular phone 13 receives the secondary bar code, the program causes self-destruction of the secondary bar code. The program may has a function of periodically inquiring of the server apparatus 11 about time. The program may also has a function of sounding the alarm or changing colors of a bar code to notify a user that the validity of a secondary bar code is going to expire. The program may has a function of automatically changing images or displaying character information to thereby eliminate a secondary bar code when the validity of the secondary bar code expires.

A method for invalidating a secondary bar code when a predetermined time elapses after issue of the secondary bar code is not limited to those described above. For example, expiration information may be included in a secondary bar code to be delivered to the cellular phone 13. When reading the secondary bar code, the bar code reader 204 also reads the expiration information and transmits the expiration information to the server apparatus 11. On the basis of the expiration information received from the vending machine 12, the CPU 101 can judges the validity of the secondary bar code.

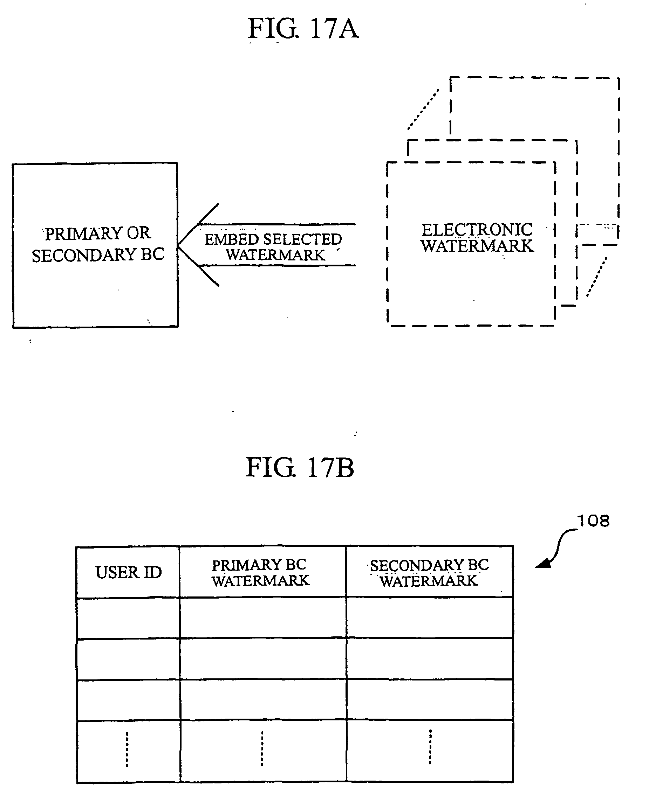

The legitimacy of a primary or secondary bar code can be judged by judging an electronic watermark embedded in the primary or secondary bar code. When a plurality of electronic watermark patterns that do not affect the visuality of a primary or secondary bar code can be prepared for embedment use, as shown in FIG. 17A, one of the electronic watermark patterns is selected and embedded in a primary or secondary bar code to be transmitted to the user's cellular phone 13.

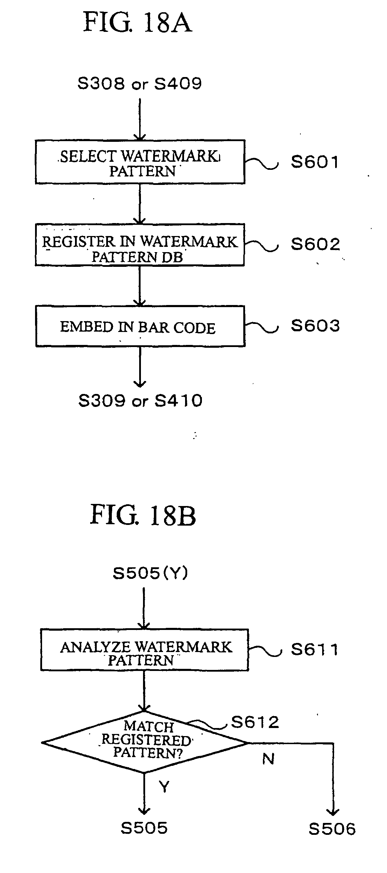

In this case, the server apparatus 11 further includes a watermark pattern database 108 as shown in FIG. 17B. Records of the watermark pattern database 108 contain a user ID, an electronic watermark pattern applied to a primary bar code, and an electronic watermark pattern applied to a secondary bar code. The steps shown in FIGS. 18A and 18B are added to the processing that the server apparatus 11 performs. The steps shown in FIGS. 18A and 18B are added to the processing of the second embodiment; however, similar steps can be added to the processing of the first embodiment.

In steps S308(a) and S308(b) or steps S409(a) and S409(b), upon completion of registration of a pointer in the first table 111 and the second table 112, the CPU 101 of the server apparatus 11 selects an electronic watermark pattern at random (step S601). The CPU 101 registers the selected electronic watermark pattern in the watermark pattern database 108 while a user ID is used as a key (step S602), and embeds the electronic watermark pattern in a bar code that is generated in step S303 or step S404 (step S603). Then, the CPU 101 proceeds to step S309 or S410.

When, in step S505, the CPU 101 judges that the same user information item is accessed from both of the first table 111 and the second table 112, the CPU 101 analyzes an electronic watermark pattern embedded in a bar code received from the vending machine 12 (step S611). The CPU 101 fetches a registered electronic watermark pattern associated with a primary or secondary bar code from the watermark pattern database 108 while using a user ID as a key and judges whether or not the registered watermark pattern matches the analyzed watermark pattern (step S612). When the patterns match, the CPU 101 proceeds to step S506 and authenticates the user. When the patterns do not match, the CPU 101 proceeds to step S506 and disables user authentication.

Since one of a plurality of electronic watermark patterns is selected and embedded in a bar code as described above, a forged bar code cannot be used unless the embedded electronic watermark pattern is also forged. Particularly, in the case of a secondary bar code, validity expiration time is attached thereto; thus, it is substantially impossible to analyze and forge an electronic watermark in addition to forgery of an image pattern within this short period of time. Therefore, a bar code transmitted to a user can be prevented from being forged and used fraudulently.

According to the above-described first and second embodiments, a primary bar code and a secondary bar code are displayed on the display unit 305 of the cellular phone 13 as a bar code that assumes the form of a two-tone, two-dimensional matrix pattern. However, the primary and secondary bar codes may be displayed as a bar code that assumes the form of a multi-tone pattern or a three-dimensional pattern. A three-dimensional bar code is formed, for example, such that a two-dimensional bar code is displayed on each face of a cube formed of polygons. The polygons are rotated by use of an application such as a Java program. The server apparatus 11 can recognize all codes displayed on the corresponding faces of the cube through rotation of the polygons. A three-dimensional bar code can contain a greater quantity of information by increasing the number of faces. Use of identification information having large information quantity, such as a three-dimensional bar code, enhances the effect of reducing required storage capacity that the second embodiment yields.

In the case where the vending machine 12 and the cellular phone 13 can directly communicate with each other by use of, for example, Bluetooth technology, even invisible information can be used in place of the above-described primary and secondary bar codes. Irrespective of the form of identification information, the following system configuration can be employed: a pointer indicative of user information is registered in the first and second tables 111 and 112 in accordance with the remainders a and b after dividing a value obtained through digitization of the identification information by the numeric values A and B; and identification information and user information are associated with each other without involvement of collation of identification information items.

According to the above-described first and second embodiments, the CPU 101 of the server apparatus 11 generates a bar code (a primary or secondary bar code) in the same way for transmission to the cellular phone 13 of any user. However, the display units 305 of the cellular phones 13 differ in size and the number of dots depending on models.

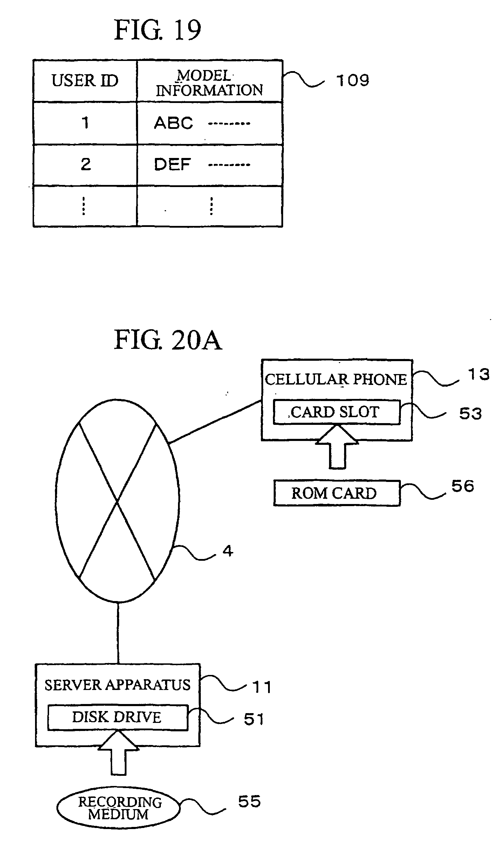

In order to generate a most effective bar code (a primary or secondary bar code) in accordance with the model of the cellular phone 13, the server apparatus 11 can include a model database 109 shown in FIG. 19. The model database 109 associatively stores user IDs and information concerning the models of the cellular phones 13 (including at least the size and the number of dots of the display units 305). When a primary bar code or a secondary bar code is to be issued, the server apparatus 11 references the model database 109 and can issue a bar code in accordance with the model of the cellular phone 13 to which the bar code is to be transmitted.

A bar code (a primary or secondary bar code) to be transmitted to the cellular phone 13 from the server apparatus 11 can be in a compressed form. After generating a bar code (a primary or secondary bar code) irrespective of model, the CPU 101 of the server apparatus 11 can compress the bar code in accordance with the model of the cellular phone 13 to which the bar code is to be transmitted. A compressed bar code is displayed on the display unit 305 of the cellular phone 13 and is read by the bar code reader 204.

Through employment of the above-described practice, the server apparatus 11 can generate a bar code having a fine pattern for the display unit 305 that is of a new-model cellular phone 13 and has a large number of display dots, and a bar code displayable on even the display unit 305 that is of an old-model cellular phone 13 and has a small number of display dots. Thus, a bar code (a primary or secondary bar code) can be displayed while the function of the display unit 305 is optimally utilized. Although a user frequently changes models of the cellular phone 13, the system can generate a two-dimensional bar code adapted to a new model and is thus particularly effective for use with the cellular phones 13, which are making rapid technological progress.

According to the above-described first and second embodiments, a primary bar code and a secondary bar code are retained in the cellular phone 13 and displayed on the display unit 305. However, in place of the cellular phone 13, a different type of radio communication terminal capable of performing radio communication with the server apparatus 11 can be used. When, in place of a primary bar code and a secondary bar code, invisible information is used through use of Bluetooth technology or the like, a radio communication terminal not having a display unit can be used. Nevertheless, use of cellular phones, which are highly popular, as radio communication terminals enables many users to use the system of the present invention.

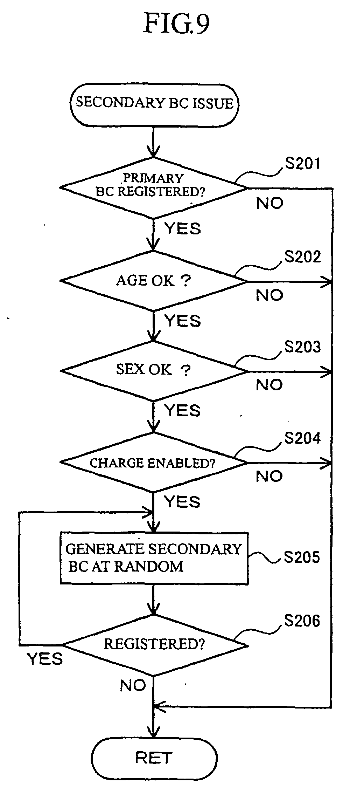

According to the above-described first and second embodiments, the programs represented by the flowcharts of FIGS. 8A, 8B, 9, 13, 14, 15, 18A, and 18B are stored in the storage unit 102 of the server apparatus 11, the ROM 302 of the cellular phone 13, and a storage unit 402 of the storage unit 202 of the vending machine 12. However, all or part of the programs may be provided separately from hardware.

FIG. 20A shows a first example method for providing programs. The server apparatus 11 further includes a disk drive 51, which drives a computer-readable recording medium 55, such as CD-ROM or DVD-ROM, so as to read data from the recording medium 55. The CPU 101 can be adapted to cause the disk drive 51 to read stored programs from the recording medium 55 and install the programs in the storage unit 102. The cellular phone 13 further includes a card slot 53 into which a ROM card 56 is inserted so as to allow reading of data therefrom. The CPU 301 sequentially fetches recorded program instructions from the ROM card 56 via the card slot 53 and executes the instructions.

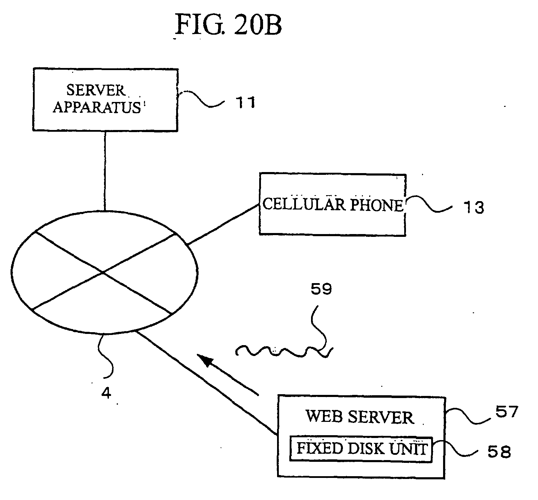

FIG. 20B shows a second example method for providing programs. Processing programs to be executed in the server apparatus 11 and the cellular phone 13 are stored in a fixed disk unit 58 that a Web server 57 on the Internet 4 includes. Upon reception of a program transmission request from the server apparatus 11 or the cellular phone 13, the Web server 57 converts programs stored in the fixed disk unit 58 into data signals and transmits to the requester the signals in the form of being superposed on a carrier 59. When the first communication unit 103 of the server apparatus 11 or the communication unit 306 of the cellular phone 13 receives the programs that have been transmitted while being superposed on the carrier, the CPU 101 or 301 can install the programs in the storage unit 102 or the ROM 302. The ROM 302 of the cellular phone 13 can be a flash memory, which allows data to be electrically written thereinto and erased therefrom.

## Claims

1. An identification information issue system comprising a radio communication terminal (13) and a server apparatus (11) capable of communicating with the radio communication terminal (13) via at least a radio communication line (41),
**characterized in that**
the radio communication terminal (13) comprises:
primary identification information retainment means (302, 303) for retaining primary identification information managed by a user of the radio communication terminal (13); and
secondary identification information retainment means (303) for retaining secondary identification information that can be received from the server apparatus (11) as a result of input of the primary identification to the server apparatus (11), the secondary identification information having no regularity in relation to the primary identification information;
the server apparatus (11) is connected to:
a first input unit (204) for inputting thereto the primary identification information retained in the primary identification information retainment means (302, 303), and a second input unit (204) for inputting thereto the secondary identification information retained in the secondary identification information retainment means; and comprises:
address storage means (105, 107) for storing address information items concerning radio communication terminals (13) of users who legitimately manage respective primary identification information items, in such a manner as to be associable with the corresponding primary identification information items;
secondary identification information issue means (101, S143, S404) for issuing secondary identification information having a predetermined expiration time attached thereto, in response to input of the primary identification information from the first input unit (204);
user associating means (106, 111, 112) for associating the secondary identification information issued by the secondary identification information issue means (101, S143, S404) with the user who legitimately manages the primary identification information having served as a trigger for the issue;
secondary identification information transmission means (104, S146) for transmitting the secondary identification information issued by the secondary identification information issue means (101, S143, S404), via the radio communication line (41) in accordance with address information stored in the address storage means (105) in such a manner as to be associable with the primary identification information having served as a trigger for the issue, to thereby cause the radio communication terminal (13) of the user who legitimately manages the primary identification information having served as a trigger for the issue to retain the issued secondary identification information;
association judgment means (101, S150, S505) for judging whether or not the secondary identification information input from the second input unit (204) is associated with the user in the user associating means (106, 111, 112);
expiration judgment means (110, S150) for judging whether or not the validity of the secondary identification information input from the second input unit (204) has expired; and
process permission means (101, S151) for permitting execution of a predetermined process when the association judgment means judges that association with the user is established, and the expiration judgment means (110. S150) judges that the validity has not expired, wherein
the primary identification information input from the first input unit (204) and the secondary identification information input from the second input unit (204) are in a form which does not enable determination of whether or not the information items have been retained in the radio communication terminal (13) of the user who legitimately manages the information items.

2. An identification information issue apparatus (11) which can communicate with a radio communication terminal (13) via at least a radio communication line (41), the radio communication terminal (13) being able to retain primary identification information managed by a user and secondary identification information that can be received through input of the primary identification information and has no regularity in relation to the primary identification information, **characterized in that**
the identification information issue apparatus (11) is connected to first and second input units (204) for inputting the primary identification information and the secondary identification information, respectively, retained in the radio communication terminal (13), and comprises:
address storage means (105, 107) for storing address information items concerning radio communication terminals (13) of users who legitimately manage respective primary identification information items, in such a manner as to be associable with the corresponding primary identification information items;
secondary identification information issue means (101, S143, S404) for issuing secondary identification information having a predetermined expiration time attached thereto, in response to input of the primary identification information from the first input unit;
user associating means (106, 111, 112) for associating the secondary identification information issued by the secondary identification information issue means (101, S143, S404) with the user who legitimately manages the primary identification information having served as a trigger for the issue;
secondary identification information transmission means (104, S146) for transmitting the secondary identification information issued by the secondary identification information issue means (101, S143, S404), via the radio communication line (41) in accordance with address information stored in the address storage means (105) in such a manner as to be associable with the primary identification information having served as a trigger for the issue, to thereby cause the radio communication terminal (13) of the user who legitimately manages the primary identification information having served as a trigger for the issue to retain the issued secondary identification information;
association judgment means (101, S150, S505) for judging whether or not the secondary identification information input from the second input unit (204) is associated with the user in the user associating means (106, 111, 112);
expiration judgment means (110, S150) for judging whether or not the validity of the secondary identification information input from the second input unit (204) has expired; and
process permission means (101, S151) for permitting execution of a predetermined process when the association judgment means judges that association with the user is established, and the expiration judgment means (110, S150) judges that the validity has not expired, wherein
the primary identification information input from the first input unit (204) and the secondary identification information input from the second input unit (204) are in a form which does not enable determination of whether or not the information items have been retained in the radio communication terminal (13) of the user who legitimately manages the information items.

3. An identification information issue apparatus (11) as described in claim 2, wherein
the user associating means comprises a plurality of tables (111, 112) in which associating information for association with a user having corresponding identification information assigned thereto is registered in storage positions corresponding to the results of arithmetically operating a numeric value corresponding to the secondary identification information issued by the secondary identification information issue means by use of a plurality of different arithmetic expressions; and
the association judgment means comprises means (101, S505) for judging whether or not, in relation to the secondary identification information input from the second input unit (204), associating information for the same user is commonly registered in all of the plurality of tables (111, 112) in the storage positions corresponding to the results of the arithmetic operations by the plurality of arithmetic expressions.

4. An identification information issue apparatus (11) as described in claim 3, wherein
the plurality of arithmetic expressions are expressions for obtaining remainders by dividing a numeric value corresponding to the secondary identification information input from the second input unit (204) by different divisors; and
the least common multiple for the different divisors is greater than the difference between the maximum and minimum values that can be assumed by the numeric value corresponding to the secondary identification information.

5. An identification information issue apparatus (11) as described in claim 3, further comprising:
elimination means (101, S414) for eliminating the secondary identification information issued by the secondary identification information issue means (101, S404), upon completion of transmission by the secondary identification information transmission means.

6. An identification information issue apparatus (11) as described in claim 2, further comprising:
watermark attachment means (101, S603) for embedding one of a plurality of predetermined electronic watermarks in the secondary identification information issued by the secondary identification information issue means (101, S143, S404);
watermark associating means (108) for associating the secondary identification information issued by the secondary identification information issue means (101, S143, S404) with an electronic watermark attached by the watermark attachment means (101, S603);
watermark analysis means (101, S611) for analyzing an electronic watermark embedded in the secondary identification information input from the second input unit (204); and
watermark judgment means (101, S612) for judging whether or not the electronic watermark analyzed by the watermark analysis means (101, S611) is associated with the input secondary identification information by the watermark associating means, wherein
the process permission means (101, S151) permits execution of the predetermined process when the watermark judgment means (101, S612) judges that the electronic watermark is associated with the secondary identification information.

7. An identification information issue apparatus (11) as described in claim 2, further comprising:
attribute judgment means (101, S202, S203, S403) for judging whether or not the user who legitimately manages the primary identification information input from the first input unit (204) has a predetermined attribute, wherein
the apparatus is connected to a vending machine (12) which vends a commodity permitted to sell only to a user having the predetermined attribute and which is connected to the second input unit (204); and
the process permission means notifies the vending machine (12) connected to the second input unit (204) having input the secondary identification information that the vending machine (12) is permitted to vend the commodity.

8. An identification information issue apparatus (11) as described in claim 7, further comprising:
secondary identification information encryption means (101, S145) for encrypting the secondary identification information issued by the secondary identification information issue means (101, S143), by use of an encryption key corresponding to a decryption key unique to the vending machine (12) connected to the first input unit (204) having input the primary identification information, and causing the secondary identification information transmission means (104, S146) to transmit the encrypted secondary identification information; and
secondary identification information decryption means (101, S149) for decrypting the secondary identification information input from the second input unit (204) by use of the decryption key unique to the vending machine (12) connected to the second input unit (204).

9. An identification information issue apparatus (11) as described in claim 2, wherein
the radio communication terminal (13) comprises a display unit (305) for displaying the primary identification information and the secondary identification information, and
each of the first and second input units (204) is formed of a read unit for reading the primary identification information or the secondary identification information displayed on the display unit (305).

10. An identification information issue apparatus (11) as described in claim 9, further comprising:
model information storage means (109) for storing model information for each radio communication terminal (13), including at least information about the display unit (305), in association with the primary identification information, wherein
the secondary identification information issue means (101, S143, S404) issues the secondary identification information in accordance with the model information that is stored in the model information storage means (109) in association with the primary identification information having served as a trigger for the issue.

11. An identification information issue apparatus (11) as described in claim 2, wherein the radio communication terminal (13) is a cellular phone.

12. An identification information issue apparatus (11) which can communicate with a radio communication terminal (13) via at least a radio communication line (41), the radio communication terminal (13) being able to retain primary identification information managed by a user and secondary identification information to be issued in response to input of the primary identification information, **characterized in that**
the apparatus comprises a memory (102) for storing data including a program, a processor (101) for executing the program stored in the memory, and a communication unit (104) for transmitting information to and receiving information from the radio communication terminal (13) under the control of the processor (101), and is connected to first and second input units (204) for inputting the primary identification information and the secondary identification information, respectively, retained in the radio communication terminal (13), wherein
the memory (102) comprises:
address storage means (105, 107) for storing address information items concerning radio communication terminals (13) of users who legitimately manage respective primary identification information items, in such a manner as to be associable with the corresponding primary identification information items; and
user associating means (106, 111, 112) for associating the secondary identification information issued by the secondary identification information issue means with the user who legitimately manages the primary identification information having served as a trigger for the issue;
the program comprises:
a first process (S143, S404) for issuing, in response to input of the primary identification information from the first input unit (204), the secondary identification information having no regularity in relation to the input primary identification information and having a predetermined expiration time attached thereto;
a second process (S146) for transmitting the secondary identification information issued by the first process (S143, S404), via the radio communication line (41) in accordance with address information stored in the address storage means (105, 107) in such a manner as to be associable with the primary identification information having served as a trigger for the issue, to thereby cause the radio communication terminal (13) of the user who legitimately manages the primary identification information having served as a trigger for the issue to retain the issued secondary identification information;
a third process (S150, S505) for judging whether or not the secondary identification information input from the second input unit (204) is associated with the user in the user associating means (106, 111, 112);
a fourth process (S150) for judging whether or not the validity of the secondary identification information input from the second input unit (204) has expired; and
a fifth process (S151) for permitting execution of a predetermined process when the third process (S150, S505) judges that association with the user is established, and the fourth process (S150) judges that the validity has not expired, wherein
the primary identification information input from the first input unit (204) and the secondary identification information input from the second input unit (204) are in a form which does not enable determination of whether or not the information items have been retained in the radio communication terminal (13) of the user who legitimately manages the information items.

13. An identification information issue method **characterized by** comprising:
inputting to a computer apparatus (11) from a first input unit (204) primary identification information retained in a radio communication terminal (13) and managed by a user;
issuing from the computer apparatus (11), in response to input of the primary identification information, secondary identification information having no regularity in relation to the primary identification information and having a predetermined expiration time attached thereto;
associating the issued secondary identification information with the user who legitimately manages the primary identification information having served as a trigger for the issue;
transmitting the issued secondary identification information via the radio communication line (41) in accordance with address information previously stored in the computer apparatus (11) in such a manner as to be associable with the primary identification information having served as a trigger for the issue, to thereby cause the radio communication terminal (13) of the user who legitimately manages the primary identification information having served as a trigger for the issue to retain the issued secondary identification information;
inputting the secondary identification information received and retained by the radio communication terminal (13) to the computer apparatus (11) from a second input unit (204); and
permitting, by the computer apparatus (11), execution of a predetermined process when the input secondary identification information is associated with the user in the computer apparatus (11), and the validity of the input secondary identification information has not expired, wherein
the primary identification information input from the first input unit (204) and the secondary identification information input from the second input unit (204) are in a form which does not enable determination of whether or not the information items have been retained in the radio communication terminal (13) of the user who legitimately manages the information items.

14. An identification information issue apparatus (11) for issuing identification information to be assigned to a user,
**characterized by** comprising:
identification information issue means (101, S303, S404) for issuing the identification information;
arithmetic operation means (101, S305, S406) for arithmetically operating a numeric value corresponding to the identification information issued by the identification information issue means (101, S303, S404) by use of a plurality of different arithmetic expressions to thereby obtain the respective arithmetic operation results;
a plurality of tables (111, 112) provided to correspond to the plurality of arithmetic expressions and adapted to store associating information for association with a user having corresponding identification information assigned thereto, in storage positions corresponding to the results of arithmetic operations;
registration judgment means (101, S307, S408) for judging whether or not associating information for the same user is commonly registered in all of the plurality of tables (111, 112) in the storage positions corresponding to the arithmetic operation results obtained by the arithmetic operation means (101, S305, S406);
redo means (101, S307, S408) for causing the identification information issue means to redo issue of identification information when the registration judgment means (101, S307, S408) has judged that associating information for the same user is commonly registered;
associating means (101, S308, S409) for registering associating information for association with a user to whom identification information is to be assigned, in the storage positions of the tables (111, 112) corresponding to the arithmetic operation results obtained by the arithmetic operation means when the registration judgment means (101, S307, S408) has judged that associating information for the same user is not commonly registered; and
identification information output means (104, S309, S413) for outputting identification information in relation to which the associating means (101, S308, S409) has registered associating information, to a user to whom the identification information is to be assigned, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

15. An identification information issue apparatus (11) as described in claim 14, wherein
the plurality of arithmetic expressions are expressions for obtaining remainders by dividing a numeric value corresponding to the identification information issued by the identification information issue means (101, S303, S404) by different divisors; and
the least common multiple for the different divisors is greater than the difference between the maximum and minimum values that can be assumed by the numeric value corresponding to the identification information issuable by the identification information issue means (101, S303, S404).

16. An identification information issue apparatus (11) as described in claim 15, wherein the divisors to be used respectively in the plurality of arithmetic expressions are prime to each other.

17. An identification information issue apparatus (11) as described in claim 14, further comprising:
elimination means (101, S310, S414) for eliminating the identification information issued by the identification information issue means (101, S303, S404), upon completion of output of the identification information to the user by the identification information output means (104, S309, S413).

18. An identification information issue apparatus (11) as described in claim 14, further comprising:
user registration means (107) for registering therein a user to whom the identification information is to be assigned;
request reception means (103, S148) for receiving an identification issue request from a user registered in the user registration means (107); and
user authentication means (101, S401) for, while referencing the user registration means, authenticating the user who has made an issue request received by the request reception means (103, S148), wherein
the identification information issue means (101, S404) issues the identification information when the user authentication means (101, S401) authenticates the user.

19. An identification information issue apparatus (11) as described in claim 14, wherein
the identification information output means (104, S309, S413) comprises means for transmitting the identification information issued by the identification information issue means, to a radio communication unit (13) owned by a user to whom the identification information is to be assigned.

20. An identification information issue apparatus (11) as described in claim 14, further comprising:
watermark attachment means (101, S603) for embedding one of a plurality of predetermined electronic watermarks in the identification information issued by the identification information issue means (101, S303, S404); and
watermark associating means (108) for associating the identification information issued by the identification information issue means (101, S303, S404) with an electronic watermark attached by the watermark attachment means (101, S603).

21. An identification information issue apparatus (11) for issuing identification information to be assigned to a user, **characterized by** comprising a memory (102) for storing data including a program, a processor (101) for executing the program stored in the memory, and an output unit (104) for outputting identification information assigned to a user under the control of the processor (101), wherein
the memory (102) comprises:
a plurality of tables (111, 112) in which associating information for association with a user having corresponding identification information assigned thereto is registered in storage positions corresponding to the results of arithmetically operating a numeric value corresponding to the identification information assigned to the user by use of a plurality of different arithmetic expressions, the tables (111, 112) being provided to correspond to the arithmetic expressions;
the program comprises:
a first process (S303, S404) for issuing identification information;
a second process (S305, S406) for arithmetically operating a numeric value corresponding to the identification information issued by the first process (S303, S404) by use of the plurality of different arithmetic expressions to thereby obtain the respective arithmetic operation results;
a third process (S307, S408) for judging whether or not associating information for the same user is commonly registered in all of the plurality of tables (111, 112) in the storage positions corresponding to the arithmetic operation results obtained by the second process (S305, S406);
a fourth process (S307, S408) for redoing issue of identification information by the first process (S303, S404) when the third process (S307, S408) has judged that associating information for the same user is commonly registered;
a fifth process (S308, S408) for registering associating information for association with a user to whom identification information is to be assigned, in the storage positions of the tables (111, 112) corresponding to the arithmetic operation results obtained by the second process (S305, S406) when the third process (S307, S408) has judged that associating information for the same user is not commonly registered; and
a sixth process (S309, S409) for outputting from the output unit identification information in relation to which registration of associating information has been performed by the fifth process (S308, S408), to a user to whom the identification information is to be assigned, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

22. An identification information issue method **characterized by** comprising:
issuing identification information to be assigned to the user;
arithmetically operating a numeric value corresponding to the issued identification information by use of a plurality of different arithmetic expressions to thereby obtain the respective arithmetic operation results;
judging whether or not associating information for a user having previously issued identification information is commonly registered in all of the tables (111, 112) corresponding to the arithmetic expressions in the storage positions corresponding to the obtained arithmetic operation results;
redoing the issue of identification information when associating information for the user having previously issued identification information is commonly registered in all of the tables (111, 112);
registering associating information for the user to whom the identification information is issued, in the storage positions of the tables (111, 112) corresponding to the obtained arithmetic operation results when associating information for the user having previously issued identification information is not commonly registered in all of the tables (111, 112); and
outputting, to the user, identification information in relation to which user associating information has been registered in the tables (111, 112), wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

23. An authentication apparatus (11) for authenticating a user by use of identification information assigned to the user,
**characterized by** comprising:
a plurality of tables (111, 112) in which associating information for association with a user having corresponding identification information assigned thereto is registered in storage positions corresponding to the results of arithmetically operating a numeric value corresponding to the identification information assigned to the user by use of a plurality of different arithmetic expressions, the tables (111, 112) being provided to correspond to the arithmetic expressions;
registration judgment means (101, S505) for judging whether or not associating information for the same user is commonly registered in all of the plurality of tables (111, 112) in the storage positions corresponding to the results of arithmetically operating a numeric value corresponding to identification information input by a certain user having the identification information assigned thereto, by use of the plurality of arithmetic expressions; and
user authentication means (101, S506) for authenticating the user when the registration judgment means (101, S505) judges that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

24. An authentication apparatus (11) as described in claim 23, wherein
the plurality of arithmetic expressions are expressions for obtaining remainders by dividing a numeric value corresponding to the identification information input by the user by different divisors; and
the least common multiple for the different divisors is greater than the difference between the maximum and minimum values that can be assumed by the numeric value corresponding to the identification information assignable to the user.

25. An authentication apparatus (11) as described in claim 21, wherein the divisors to be used respectively in the plurality of arithmetic expressions are prime to each other.

26. An authentication apparatus (11) as described in claim 20, wherein the identification information assigned to the user is eliminated upon completion of output of the identification information to the user.

27. An authentication apparatus (11) for authenticating a user by use of identification information assigned to the user,
**characterized by** comprising:
a memory (102) for storing data including a program, a processor (101) for executing the program stored in the memory, and an input unit (103) for inputting identification information assigned to a user under the control of the processor (101), wherein
the memory (102) comprises:
a plurality of tables (111, 112) in which associating information for association with a user having corresponding identification information assigned thereto is registered in storage positions corresponding to the results of arithmetically operating a numeric value corresponding to the identification information assigned to the user by use of a plurality of different arithmetic expressions, the tables (111, 112) being provided to correspond to the arithmetic expressions;
the program comprises:
a first process (S505) for judging whether or not associating information for the same user is commonly registered in all of the plurality of tables (111, 112) in the storage positions corresponding to the results of arithmetically operating a numeric value corresponding to identification information input from the first input unit (103) by use of the plurality of arithmetic expressions; and
a second process (S506) for authenticating the user when the first process (S505) judges that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

28. An authentication method for authenticating a user by use of identification information assigned to the user,
**characterized by** comprising:
causing a user to input identification information assigned to the user;
arithmetically operating a numeric value corresponding to the input identification information by use of a plurality of different arithmetic expressions to thereby obtain the respective arithmetic operation results;
judging whether or not associating information for the same user is commonly registered in all of the tables (111, 112) corresponding to the arithmetic expressions in storage positions corresponding to the obtained arithmetic operation results; and
authenticating the user when judgment is made that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results; and
when the identification information is assigned to the user, associating information for the user is registered in the storage positions of the tables (111, 112) corresponding to the results of arithmetically operating a numeric value corresponding to the assigned identification information by use of the plurality of arithmetic expressions.

29. A program which is executed on a computer apparatus (11) that can communicate with a radio communication terminal (13) via at least a radio communication line (41), the radio communication terminal (13) being able to retain primary identification information managed by a user and secondary identification information receivable through input of the primary identification information and having no regularity in relation to the primary identification information, and is connected to first and second input units (204) for inputting the primary identification information and the secondary identification information, respectively, retained in the radio communication terminal (13), the program comprising:
address storage means (105, 107) for storing address information items concerning radio communication terminals (13) of users who legitimately manage respective primary identification information items, in such a manner as to be associable with the corresponding primary identification information items;
secondary identification information issue means (101, S143) for issuing secondary identification information having a predetermined expiration time attached thereto, in response to input of the primary identification information from the first input unit;
user associating means (106, 111, 112) for associating the secondary identification information issued by the secondary identification information issue means with the user who legitimately manages the primary identification information having served as a trigger for the issue;
secondary identification information transmission means (104, S146) for transmitting the secondary identification information issued by the secondary identification information issue means (101, S143), via the radio communication line (41) in accordance with address information stored in the address storage means (105) in such a manner as to be associable with the primary identification information having served as a trigger for the issue, to thereby cause the radio communication terminal (13) of the user who legitimately manages the primary identification information having served as a trigger for the issue to retain the issued secondary identification information;
association judgment means for judging whether or not the secondary identification information input from the second input unit (204) is associated with the user in the user associating means (106, 111, 112);
expiration judgment means (110, S150) for judging whether or not the validity of the secondary identification information input from the second input unit (204) has expired; and
process permission means (101, S151) for permitting execution of a predetermined process when the association judgment means judges that association with the user is established, and the expiration judgment means (110, S150) judges that the validity has not expired, wherein
the primary identification information or the secondary identification information input from the first and second input units (204) are in a form which does not enable determination of whether or not the information items have been retained in the radio communication terminal (13) of the user who legitimately manages the information items.

30. A computer-readable recording medium (55) storing a program which is executed on a computer apparatus (11) that can communicate with a radio communication terminal (13) via at least a radio communication line (41), the radio communication terminal (13) being able to retain primary identification information managed by a user and secondary identification information receivable through input of the primary identification information and having no regularity in relation to the primary identification information, and is connected to first and second input units (204) for inputting the primary identification information and the secondary identification information, respectively, retained in the radio communication terminal (13), the program comprising:
address storage means (105, 107) for storing address information items concerning radio communication terminals (13) of users who legitimately manage respective primary identification information items, in such a manner as to be associable with the corresponding primary identification information items;
secondary identification information issue means (101, S143) for issuing secondary identification information having a predetermined expiration time attached thereto, in response to input of the primary identification information from the first input unit (204);
user associating means (106, 111, 112) for associating the secondary identification information issued by the secondary identification information issue means with the user who legitimately manages the primary identification information having served as a trigger for the issue;
secondary identification information transmission means (104, S146) for transmitting the secondary identification information issued by the secondary identification information issue means (101, S143), via the radio communication line (41) in accordance with address information stored in the address storage means (105) in such a manner as to be associable with the primary identification information having served as a trigger for the issue, to thereby cause the radio communication terminal (13) of the user who legitimately manages the primary identification information having served as a trigger for the issue to retain the issued secondary identification information;
association judgment means for judging whether or not the secondary identification information input from the second input unit (204) is associated with the user in the user associating means (106, 111, 112);
expiration judgment means (110, S150) for judging whether or not the validity of the secondary identification information input from the second input unit (204) has expired; and
process permission means (101, S151) for permitting execution of a predetermined process when the association judgment means judges that association with the user is established, and the expiration judgment means (110, S150) judges that the validity has not expired, wherein
the primary identification information or the secondary identification information input from the first and second input units (204) are in a form which does not enable determination of whether or not the information items have been retained in the radio communication terminal (13) of the user who legitimately manages the information items.

31. A carrier wave (59) which carries a superposed data signal representing a program which is executed on a computer apparatus (11) that can communicate with a radio communication terminal (13) via at least a radio communication line (41), the radio communication terminal (13) being able to retain primary identification information managed by a user and secondary identification information receivable through input of the primary identification information and having no regularity in relation to the primary identification information, and is connected to first and second input units (204) for inputting the primary identification information and the secondary identification information, respectively, retained in the radio communication terminal (13), the program comprising:
address storage means (105, 107) for storing address information items concerning radio communication terminals (13) of users who legitimately manage respective primary identification information items, in such a manner as to be associable with the corresponding primary identification information items;
secondary identification information issue means (101, S143) for issuing secondary identification information having a predetermined expiration time attached thereto, in response to input of the primary identification information from the first input unit (204);
user associating means (106, 111, 112) for associating the secondary identification information issued by the secondary identification information issue means with the user who legitimately manages the primary identification information having served as a trigger for the issue;
secondary identification information transmission means (104, S146) for transmitting the secondary identification information issued by the secondary identification information issue means (101, S143), via the radio communication line (41) in accordance with address information stored in the address storage means (105) in such a manner as to be associable with the primary identification information having served as a trigger for the issue, to thereby cause the radio communication terminal (13) of the user who legitimately manages the primary identification information having served as a trigger for the issue to retain the issued secondary identification information;
association judgment means for judging whether or not the secondary identification information input from the second input unit (204) is associated with the user in the user associating means (106, 111, 112);
expiration judgment means (110, S150) for judging whether or not the validity of the secondary identification information input from the second input unit (204) has expired; and
process permission means (101, S151) for permitting execution of a predetermined process when the association judgment means judges that association with the user is established, and the expiration judgment means (110, S150) judges that the validity has not expired, wherein
the primary identification information or the secondary identification information input from the first and second input units (204) are in a form which does not enable determination of whether or not the information items have been retained in the radio communication terminal (13) of the user who legitimately manages the information items.

32. A program which is executed on a computer apparatus (11), comprising:
a step (S303, S404) of issuing identification information to be assigned to a user;
a step (S305, S406) of arithmetically operating a numeric value corresponding to the issued identification information by use of a plurality of different arithmetic expressions to thereby obtain the respective arithmetic operation results;
a step (S307, S408) of judging whether or not associating information for a user having previously issued identification information is commonly registered in all of the tables (111, 112) corresponding to the arithmetic expressions in the storage positions corresponding to the obtained arithmetic operation results;
a step (S307, S408) of redoing the issue of identification information when associating information for a user having previously issued identification information is commonly registered in all of the tables (111, 112);
a step (S308, S409) of registering associating information for the user to whom the identification information is issued, in the storage positions of the tables (111, 112) corresponding to the obtained arithmetic operation results when associating information for a user having previously issued identification information is not commonly registered in all of the tables (111, 112); and
a step (S309, S413) of outputting, to the user, identification information in relation to which user associating information has been registered in the tables, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

33. A computer-readable recording medium (55) storing a program which is executed on a computer apparatus (11), the program comprising:
a step (S303, S404) of issuing identification information to be assigned to a user;
a step (S305, S406) of arithmetically operating a numeric value corresponding to the issued identification information by use of a plurality of different arithmetic expressions to thereby obtain the respective arithmetic operation results;
a step (S307, S408) of judging whether or not associating information for a user having previously issued identification information is commonly registered in all of the tables (111, 112) corresponding to the arithmetic expressions in the storage positions corresponding to the obtained arithmetic operation results;
a step (S307, S408) of redoing the issue of identification information when associating information for a user having previously issued identification information is commonly registered in all of the tables (111, 112);
a step (S308, S409) of registering associating information for the user to whom the identification information is issued, in the storage positions of the tables (111, 112) corresponding to the obtained arithmetic operation results when associating information for a user having previously issued identification information is not commonly registered in all of the tables (111, 112); and
a step (S309, S413) of outputting, to the user, identification information in relation to which user associating information has been registered in the tables, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

34. A carrier wave (59) which carries a superposed data signal representing a program which is executed on a computer apparatus (11) (11), the program comprising:
a step (S303, S404) of issuing identification information to be assigned to a user;
a step (S305, S406) of arithmetically operating a numeric value corresponding to the issued identification information by use of a plurality of different arithmetic expressions to thereby obtain the respective arithmetic operation results;
a step (S307, S408) of judging whether or not associating information for a user having previously issued identification information is commonly registered in all of the tables (111, 112) corresponding to the arithmetic expressions in the storage positions corresponding to the obtained arithmetic operation results;
a step (S307, S408) of redoing the issue of identification information when associating information for a user having previously issued identification information is commonly registered in all of the tables (111, 112);
a step (S308, S409) of registering associating information for the user to whom the identification information is issued, in the storage positions of the tables (111, 112) corresponding to the obtained arithmetic operation results when associating information for a user having previously issued identification information is not commonly registered in all of the tables (111, 112); and
a step (S309, S413) of outputting, to the user, identification information in relation to which user associating information has been registered in the tables, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results.

35. A program which is executed on a computer apparatus (11), the program comprising:
a step (S505) of judging whether or not associating information for the same user is commonly registered in all of tables (111, 112) corresponding to the arithmetic expressions in storage positions corresponding to the results of arithmetically operating a numeric value corresponding to identification information input by the user by use of the plurality of arithmetic expressions; and
a step (S506) of authenticating the user when judgment is made that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results; and
when the identification information is assigned to the user, associating information for the user is registered in the storage positions of the tables (111, 112) corresponding to the results of arithmetically operating a numeric value corresponding to the assigned identification information by use of the plurality of arithmetic expressions.

36. A computer-readable recording medium (55) storing a program which is executed on a computer apparatus (11), the program comprising:
a step (S505) of judging whether or not associating information for the same user is commonly registered in all of tables (111, 112) corresponding to the arithmetic expressions in storage positions corresponding to the results of arithmetically operating a numeric value corresponding to identification information input by the user by use of the plurality of arithmetic expressions; and
a step (S506) of authenticating the user when judgment is made that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results; and
when the identification information is assigned to the user, associating information for the user is registered in the storage positions of the tables (111, 112) corresponding to the results of arithmetically operating a numeric value corresponding to the assigned identification information by use of the plurality of arithmetic expressions.

37. A carrier wave (59) which carries a superposed data signal representing a program which is executed on a computer apparatus (11), the program comprising:
a step (S505) of judging whether or not associating information for the same user is commonly registered in all of tables (111, 112) corresponding to the arithmetic expressions in storage positions corresponding to the results of arithmetically operating a numeric value corresponding to identification information input by the user by use of the plurality of arithmetic expressions; and
a step (S506) of authenticating the user when judgment is made that associating information for the same user is commonly registered, wherein
when arithmetically operating two numeric values corresponding to two kinds of identification information by use of one of the plurality of arithmetic expressions yields the same arithmetic operation result, arithmetically operating the two numeric values by use of at least one of the remaining arithmetic expressions yields different arithmetic operation results; and
when the identification information is assigned to the user, associating information for the user is registered in the storage positions of the tables (111, 112) corresponding to the results of arithmetically operating a numeric value corresponding to the assigned identification information by use of the plurality of arithmetic expressions.
